(19) Europäisches Patentamt
European Patent Office
Office européen des brevets

(11) EP 4 545 236 A1

(12) **EUROPEAN PATENT APPLICATION**
published in accordance with Art. 153(4) EPC

(43) Date of publication:
**30.04.2025 Bulletin 2025/18**

(21) Application number: **23827160.5**

(22) Date of filing: **19.06.2023**

(51) International Patent Classification (IPC):
***B23K 9/23*** (2006.01) ***B23K 9/00*** (2006.01)
***B23K 31/00*** (2006.01) ***B63B 25/16*** (2006.01)
***B63B 73/43*** (2020.01)

(52) Cooperative Patent Classification (CPC):
**B23K 9/00; B23K 9/23; B23K 31/00; B63B 25/16; B63B 73/43**

(86) International application number:
**PCT/JP2023/022598**

(87) International publication number:
**WO 2023/248977 (28.12.2023 Gazette 2023/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.06.2022 JP 2022099498**

(71) Applicant: **NIPPON STEEL CORPORATION**
**Chiyoda-ku**
**Tokyo 100-8071 (JP)**

(72) Inventors:
- **OKAWA, Teppei**
  **Tokyo 100-8071 (JP)**
- **MATSUO, Hajime**
  **Tokyo 100-8071 (JP)**
- **KAMO, Takahiro**
  **Tokyo 100-8071 (JP)**
- **KAYAMORI, Yoichi**
  **Tokyo 100-8071 (JP)**

(74) Representative: **Vossius & Partner Patentanwälte Rechtsanwälte mbB**
**Siebertstrasse 3**
**81675 München (DE)**

# (54) WELDED JOINT MANUFACTURING METHOD, WELDED JOINT, LOW-TEMPERATURE LIQUEFIED GAS TANK DESIGN METHOD, AND LOW-TEMPERATURE LIQUEFIED GAS TANK

(57) A method of manufacturing a welded joint includes: obtaining a thermal stress that occurs in the welded joint due to a difference between a linear expansion coefficient of a weld metal and a linear expansion coefficient of a base metal at a use temperature of a low-temperature liquefied gas tank; obtaining a required CTOD value for preventing the low-temperature liquefied gas tank from undergoing a brittle fracture during an operation of the low-temperature liquefied gas tank by assuming a defect in the welded joint and taking into account an influence of the thermal stress; measuring a CTOD value of a heat-affected zone of the welded joint at the use temperature; and welding the base metal by using a thick steel plate in which the CTOD value of the heat-affected zone is confirmed to be equal to or more than the required CTOD value, as the base metal.

FIG. 8

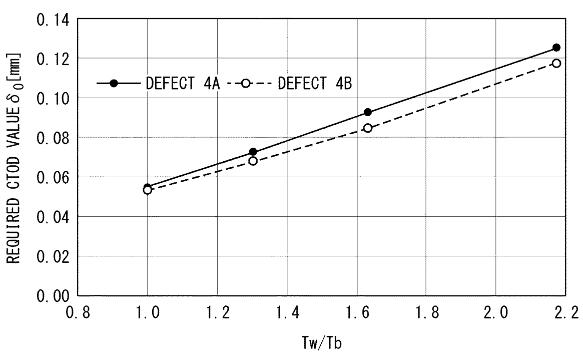


EP 4 545 236 A1

## Description

TECHNICAL FIELD

The present invention relates to a method of manufacturing a welded joint, a welded joint, a method of designing a low-temperature liquefied gas tank, and a low-temperature liquefied gas tank. Priority is claimed on Japanese Patent Application No. 2022-099498, filed June 21, 2022, the content of which is incorporated herein by reference.

BACKGROUND ART

Since a low-temperature liquefied gas is handled at an extremely low temperature, during cooling of an inner tank of a tank that stores the low-temperature liquefied gas and of a pipe that transports the low-temperature liquefied gas, stress (thermal stress) occurs due to a difference in linear expansion coefficients between a base metal and a weld metal constituting the inner tank and the pipe. This thermal stress may cause brittle fracture.

Patent Document 1 discloses, as a technology for reducing thermal stress, a pipe structure of a low-temperature liquefied gas, in which joining of different materials, that is, a pipe made of austenitic stainless steel and a pipe made of Invar, is performed by using a welding material with a linear expansion coefficient satisfying a predetermined relationship. Patent Document 1 shows an example of a welding material containing 55% or more of Ni.

Citation List

Patent Document

Patent Document 1: Japanese Patent No. 4578084

Non-Patent Document

Non-Patent Document 1: OKAWA et al.: Properties of 7%Ni-TMCP Steel and its Applicability to Large Scale LNG Storage Tanks, Journal of High Pressure Institute of Japan, Vol. 57, No. 4, pp. 221-230, 2019

SUMMARY OF INVENTION

Technical Problem

For an inner tank of a liquefied natural gas (LNG) tank, which is a type of low-temperature liquefied gas tank, for example, a Ni steel having excellent toughness at an extremely low temperature, such as 9% Ni steel or 7% Ni steel, is used, and a Ni-based welding material is used for welding of the Ni steel. However, the Ni-based welding material contains a large amount of Ni and is thus expensive. Therefore, there is a demand for a reduction in cost of the welding material and thus of the LNG tank. Reducing the amount of Ni contained in the welding material is considered as one method for the reduction in cost. However, such a welding material tends to have a larger linear expansion coefficient than that of a base metal of the LNG tank or a Ni-based welding material in the related art. When a difference in the linear expansion coefficients between the base metal in the LNG tank and the weld metal increases, occurrence of thermal stress is assumed. Such thermal stress is not assumed in the design of a welded structure in the related art and acts as an additional driving force for brittle fracture. Therefore, there is a demand for a welded joint and a welded structure capable of preventing brittle fracture even in a case where a welding material having a large linear expansion coefficient is used.

The present invention has been made in view of the above circumstances, and an object of the present invention is to provide a method of manufacturing a welded joint, a welded joint, a method of designing a low-temperature liquefied gas tank, and a low-temperature liquefied gas tank capable of suppressing brittle fracture from a welded portion even in a case where a welding material with a low cost and a large linear expansion coefficient is used in manufacturing of an inner tank of a tank that comes into contact with a low-temperature liquefied gas.

Solution to Problem

The gist of the present invention is as follows.

[1] A method of manufacturing a welded joint according to an aspect of the present invention is a method of manufacturing a welded joint that is used for an inner tank of a low-temperature liquefied gas tank and in which a linear expansion coefficient of a weld metal is larger than a linear expansion coefficient of a base metal, the method including: obtaining a thermal stress that occurs in the welded joint due to a difference between the linear expansion coefficient of the weld metal and the linear expansion coefficient of the base metal at a use temperature of the low-temperature liquefied gas tank; obtaining a required CTOD value for preventing the low-temperature liquefied gas tank from undergoing a brittle fracture during an operation of the low-temperature liquefied gas tank by assuming a defect in the welded joint and taking into account an influence of the thermal stress; measuring a CTOD value of a heat-affected zone of the welded joint at the use temperature of the low-temperature liquefied gas tank; and welding the base metal by using a thick steel plate in which the CTOD value of the heat-affected zone is confirmed to be equal to or more than the required CTOD value, as the base metal.

[2] A welded joint according to another aspect of the present invention is a welded joint that is used for an inner tank of a low-temperature liquefied gas tank, in which a linear expansion coefficient of the weld metal is larger than a linear expansion coefficient of the base metal, and a CTOD value at a use temperature of the low-temperature liquefied gas tank is equal to or more than a required CTOD value which takes into account an influence of a thermal stress that occurs due to a difference between the linear expansion coefficient of the weld metal and the linear expansion coefficient of the base metal.

[3] In the welded joint according to [2], the CTOD value at the use temperature of the low-temperature liquefied gas tank may be equal to or more than a required CTOD value $\delta_0$ calculated by Formula (1),

$$\delta_0 = \begin{cases} \varepsilon_Y c_0 \left(\frac{\pi}{2}\right)\left(\frac{\varepsilon}{\varepsilon_Y}\right)^2 & \varepsilon/\varepsilon_Y < 1.0 \\ \varepsilon_Y c_0 \left(\frac{\pi}{8}\right)\left[9\left(\frac{\varepsilon}{\varepsilon_Y}\right) - 5\right] & \varepsilon/\varepsilon_Y \geq 1.0 \end{cases} \quad \cdots \text{Formula (1)}$$

in Formula (1),

$c_0$: a characteristic crack dimension,
$\varepsilon_Y$: a yield strain of the base metal, and
$\varepsilon$: an evaluation strain.

[4] A method of designing a low-temperature liquefied gas tank according to further another aspect of the present invention is a method of designing a low-temperature liquefied gas tank having a butt-welded portion configured to include a base metal and a weld metal in an inner tank, the method including: obtaining a thermal stress that occurs in the butt-welded portion due to a difference between a linear expansion coefficient of the weld metal and a linear expansion coefficient of the base metal at a use temperature of the low-temperature liquefied gas tank; obtaining a required CTOD value for preventing the low-temperature liquefied gas tank from undergoing a brittle fracture during an operation of the low-temperature liquefied gas tank by assuming a defect in the butt-welded portion and taking into account an influence of the thermal stress; and selecting the base metal so that a CTOD value of a heat-affected zone is equal to or more than the required CTOD value.

[5] A low-temperature liquefied gas tank according to yet another aspect of the present invention is a low-temperature liquefied gas tank including: a butt-welded portion configured to include a base metal and a weld metal in an inner tank, in which a CTOD value of the butt-welded portion at a use temperature of the low-temperature liquefied gas tank is equal to or more than a required CTOD value which takes into account an influence of a thermal stress that occurs in the butt-welded portion due to a difference between a linear expansion coefficient of the weld metal and a linear expansion coefficient of the base metal.

[6] In the low-temperature liquefied gas tank according to [5], the CTOD value of the butt-welded portion at the use temperature of the low-temperature liquefied gas tank is equal to or more than a required CTOD value $\delta_0$ calculated by Formula (2),

$$\delta_0=\begin{cases}\varepsilon_Y c_0\left(\dfrac{\pi}{2}\right)\left(\dfrac{\varepsilon}{\varepsilon_Y}\right)^2 & \varepsilon/\varepsilon_Y<1.0\\ \varepsilon_Y c_0\left(\dfrac{\pi}{8}\right)\left[9\left(\dfrac{\varepsilon}{\varepsilon_Y}\right)-5\right] & \varepsilon/\varepsilon_Y\geq 1.0\end{cases}\quad \cdots \text{Formula (2)}$$

in Formula (2),

$c_0$: a characteristic crack dimension,
$\varepsilon_Y$: a yield strain of the base metal, and
$\varepsilon$: an evaluation strain.

[7] The low-temperature liquefied gas tank according to [4] or [5] may be an LNG tank.
[8] The low-temperature liquefied gas tank according to [7] may be an LNG tank for a ship, and a CTOD value δ at -165°C of the butt-welded portion of an inner tank material having a plate thickness of 25 mm or less may satisfy Formula (3) and Formula (4),

$$\delta \geq 0.001 \times (Tw/Tb)^2 + 0.057 \times (Tw/Tb) + 0.0035 \ldots \text{Formula (3)}$$

$$1 < Tw/Tb < 2.2 \ldots \text{Formula (4)}$$

in Formula (3) and Formula (4), Tw is the linear expansion coefficient [1/°C] of the weld metal, and Tb is the linear expansion coefficient [1/°C] of the base metal.
[9] The low-temperature liquefied gas tank according to [7] may be an LNG tank for a ship, and a CTOD value δ at -165°C of the butt-welded portion of an inner tank material having a plate thickness of more than 25 mm and 40 mm or less may satisfy Formula (5) and Formula (6),

$$\delta \geq 0.0038 \times (Tw/Tb)^2 + 0.074 \times (Tw/Tb) + 0.003 \ldots \text{Formula (5)}$$

$$1 < Tw/Tb < 2.2 \ldots \text{Formula (6)}$$

in Formula (5) and Formula (6), Tw is the linear expansion coefficient [1/°C] of the weld metal, and Tb is the linear expansion coefficient [1/°C] of the base metal.
[10] The low-temperature liquefied gas tank according to [7] may be an above-ground LNG tank, and a CTOD value δ at -165°C of the butt-welded portion of an inner tank material having a plate thickness of 25 mm or less may satisfy Formula (7) and Formula (8),

$$\delta \geq 0.0153 \times (Tw/Tb)^2 + 0.0274 \times (Tw/Tb) + 0.0135 \ldots \text{Formula (7)}$$

$$1 < Tw/Tb < 2.2 \ldots \text{Formula (8)}$$

in Formula (7) and Formula (8), Tw is the linear expansion coefficient [1/°C] of the weld metal, and Tb is the linear expansion coefficient [1/°C] of the base metal.
[11] The low-temperature liquefied gas tank according to [7] may be an above-ground LNG tank, and a CTOD value δ at -165°C of the butt-welded portion of an inner tank material having a plate thickness of more than 25 mm and 50 mm or less may satisfy Formula (9) and Formula (10),

$$\delta \geq 0.03 \times (Tw/Tb)^2 - 0.024 \times (Tw/Tb) + 0.0694 \ldots \text{Formula (9)}$$

$$1 < Tw/Tb < 2.2 \ldots \text{Formula (10)}$$

in Formula (9) and Formula (10), Tw is the linear expansion coefficient [1/°C] of the weld metal, and Tb is the linear expansion coefficient [1/°C] of the base metal.

[12] In the low-temperature liquefied gas tank according to any one of [5] to [11], the base metal may contain, by mass%, Mn: 0.1% to 5.0%, and Ni: 6.0% to 16.0%.

[13] In the low-temperature liquefied gas tank according to any one of [5] to [12], the weld metal may contain, by mass%, Mn: 5.0% to 20.0%, and Ni: 5.0% to 30.0%.

[Effects of the Invention]

According to the above aspects of the present invention, even in a case where a low-cost welding material having a large linear expansion coefficient is used for manufacturing of an inner tank of a tank that is in contact with a low-temperature liquefied gas, it is possible to suppress a brittle fracture from a welded portion.

[Brief Description of the Drawings]

FIG. 1 is a schematic view showing an analysis model of a welded joint subjected to FEM analysis.

FIG. 2 is a contour plot of a weld line direction stress $\sigma_x$ at -196°C under each condition of the FEM analysis.

FIG. 3 is a contour plot of a weld line perpendicular direction stress $o_y$ at - 196°C under each condition of the FEM analysis.

FIG. 4 is a graph showing a relationship between a linear expansion coefficient ratio Tw/Tb and a thermal stress at -165°C by the FEM analysis.

FIG. 5 is a schematic view showing a position of an assumed defect in a welded joint in a tank of an LNG tank independent Type C for a ship.

FIG. 6 is a schematic view for describing assumed defect dimensions of the welded joint in the LNG tank independent Type C for a ship.

FIG. 7 is a schematic view showing an example of a butt-welded joint having misalignment and angular distortion.

FIG. 8 is a graph showing a relationship between the linear expansion coefficient ratio Tw/Tb and a required CTOD value $\delta_0$ for each defect position in a case where a plate thickness is 25 mm in the LNG tank independent Type C for a ship.

FIG. 9 is a graph showing a relationship between the linear expansion coefficient ratio Tw/Tb and the required CTOD value $\delta_0$ for each defect position in a case where the plate thickness is 40 mm in the LNG tank independent Type C for a ship.

FIG. 10 is a schematic view showing an example of a structure of an above-ground LNG tank.

FIG. 11 is a schematic view showing a position of an assumed defect of a welded joint in the above-ground LNG tank.

FIG. 12 is a schematic view for describing assumed defect dimensions of the welded joint in the above-ground LNG tank.

FIG. 13 is a graph showing a relationship between the linear expansion coefficient ratio Tw/Tb and the required CTOD value $\delta_0$ for each defect position in a case where the plate thickness is 25 mm in the above-ground LNG tank.

FIG. 14 is a graph showing a relationship between the linear expansion coefficient ratio Tw/Tb and the required CTOD value $\delta_0$ for each defect position in a case where the plate thickness is 50 mm in the above-ground LNG tank.

[Embodiments of the Invention]

Hereinafter, preferred embodiments of the present invention will be described in detail with reference to the accompanying drawings.

<Method of Manufacturing Welded Joint>

A method of manufacturing a welded joint according to an embodiment of the present invention will be described. The method of manufacturing a welded joint according to the present embodiment is a method of manufacturing a welded joint that is used for an inner tank of a low-temperature liquefied gas tank and in which a linear expansion coefficient of a weld metal is larger than a linear expansion coefficient of a base metal, the method including: a thermal stress calculation step of obtaining a thermal stress that occurs in the welded joint due to a difference between the linear expansion coefficient of the weld metal and the linear expansion coefficient of the base metal at a use temperature of the low-temperature liquefied gas tank; a required CTOD value calculation step of obtaining a required CTOD value for preventing the low-temperature liquefied gas tank from undergoing a brittle fracture during an operation of the low-temperature liquefied gas tank by assuming a defect in the welded joint and taking into account an influence of the thermal stress; a CTOD value measurement step of measuring a CTOD value of a heat-affected zone of the welded joint at the use temperature of the low-temperature liquefied gas tank; and a welding step of welding the base metal by using a thick steel plate in which the CTOD value of the heat-affected zone is confirmed to be equal to or more than the required CTOD value, as the base metal.

[Thermal Stress Calculation Step]

In this step, a thermal stress that occurs in the welded joint due to the difference between the linear expansion coefficient of the weld metal and the linear expansion coefficient of the base metal at the use temperature of the low-temperature liquefied gas tank is obtained. The thermal stress can be obtained, for example, by finite element method (FEM) analysis. In the FEM analysis, the use temperature of the low-temperature liquefied gas tank may be set as a design temperature. For example, in a case of an LNG tank, a temperature of a low-temperature liquefied gas is - 162°C, but the FEM analysis may be performed assuming a design temperature of - 164°C or -165°C. Hereinafter, a method of calculating the above-described thermal stress will be described using a thermal stress analysis of a welded joint by FEM as an example with reference to FIGS. 1 to 3. FIG. 1 is a schematic view showing an analysis model of the welded joint subjected to the FEM analysis.

FIG. 1 shows an FEM analysis model of the welded joint to be analyzed, and Table 1 shows linear expansion coefficients of a base metal and a weld metal used in the FEM analysis. A welded joint 1 having a length 1 of 1000 mm, a width w of 1000 mm, and a thickness t of 30 mm is set as the FEM analysis model. The welded joint 1 is configured to include base metals 2A and 2B and a weld metal 3. A width h of the weld metal 3 is set to 30 mm, and the weld metal 3 is assumed to extend along a length direction (X direction) at a width direction center position (w/2 position) of the welded joint 1. An analysis range of the thermal stress is set to a range indicated by two-dot chain lines in FIG. 1, from one end of the welded joint 1 to 1/2 positions in the length direction (X direction) and a width direction (Y direction), and from a surface of the welded joint 1 to a 1/2 position in a thickness direction (Z direction).

[Table 1]

| | Linear Expansion Coefficient [1/°C]] | |
|---|---|---|
| | Base Metal: Tb | Weld Metal: Tw |
| Case I | $9.2 \times 10^{-6}$ | $9.2 \times 10^{-6}$ |
| Case 2 | $9.2 \times 10^{-6}$ | $15 \times 10^{-6}$ |
| Case 3 | $9.2 \times 10^{-6}$ | $20 \times 10^{-6}$ |

As linear expansion coefficients Tb of the base metals 2A and 2B, values (average values from 20°C to -162°C) of 9% Ni steel described in "Guideline for LNG above-ground type storage tank" (published by The Japan Gas Association, September 2019) are used. As linear expansion coefficients Tw of the weld metal 3, three different values of three cases are set as shown in Table 1. The linear expansion coefficient Tw of the weld metal 3 in Case 1 is set to be equal to the linear expansion coefficients Tb of the base metals 2A and 2B. Examples of a material having a linear expansion coefficient of about $9.2 \times 10^{-6}$ [1/°C] include 9% Ni steel (JIS G 3127 SL9N590) and 7% Ni steel (JIS G 3127 SL7N590). In addition, a linear expansion coefficient (average value from 20°C to -162°C) of austenitic stainless steel (for example, SUS304, SUS304L, SUS316, and SUS316L described in JIS G 4304: 2021) in Guideline for LNG above-ground type storage tank is $15 \times 10^{-6}$ [1/°C]. Therefore, the linear expansion coefficient Tw of the weld metal 3 in Case 2 is set to $15 \times 10^{-6}$ [1/°C]. In Case 3, a case where the linear expansion coefficient Tw of the weld metal 3 is significantly large is assumed, and the linear expansion coefficient Tw of the weld metal 3 is set to $20 \times 10^{-6}$ [1/°C]. The FEM analysis model is a 1/8 model using symmetry conditions, and a mesh size is set to 5 mm. An end portion is a free end, and a thermal stress that occurs when a temperature of the entire model is cooled from 25°C to -196°C is analyzed.

FIG. 2 shows contour plots of a weld line direction stress $\sigma_x$ at -196°C under each condition, and FIG. 3 shows contour plots of a weld line perpendicular direction stress $\sigma_y$. A weld line direction is a direction parallel to the length direction, and the weld line perpendicular direction is a direction parallel to the width direction. As shown in FIGS. 2 and 3, in Case 1 where the linear expansion coefficient Tw of the weld metal is the smallest, the thermal stress is the smallest, and in Case 3 where the linear expansion coefficient Tw of the weld metal is the largest, the thermal stress is the largest. In addition, the weld line direction stress $\sigma_x$ showed a maximum value at the width direction center position of the weld metal 3, and the weld line perpendicular direction stress $\sigma_y$ showed a maximum value in a base metal portion in the vicinity of the weld metal 3. It is considered that the same tendency is obtained even at -165°C. Therefore, a relationship between a linear expansion coefficient ratio Tw/Tb, which is a ratio of the linear expansion coefficient Tw of the weld metal 3 to the linear expansion coefficient Tb of the base metals 2A and 2B, and a maximum value of a thermal stress at -165°C is arranged. FIG. 4 is a graph showing a relationship between the linear expansion coefficient ratio Tw/Tb, and the weld line direction stress $\sigma_x$ and the weld line perpendicular direction stress $\sigma_y$ at -165°C. As shown in FIG. 4, the thermal stresses (weld line direction stress $\sigma_x$ and the weld line perpendicular direction stress $\sigma_y$) at - 165°C and the linear expansion coefficient ratio Tw/Tb are generally in a proportional relationship. Therefore, by performing the FEM analysis, it is possible to calculate the thermal stress that occurs in the welded joint due to the difference between the linear expansion coefficient of the weld metal and the linear expansion coefficient of the base metal at the use temperature of the low-temperature liquefied gas tank.

The linear expansion coefficient of the weld metal and the linear expansion coefficient of the base metal are measured by the following method. First, a sample having a diameter of 4 mm and a length of 15 mm is collected from each of the weld metal and the base metal. Using a vertical dilatometer (TM-7000 type manufactured by ADVANCE RIKO, Inc.), a temperature of the sample is lowered from 20°C to - 190°C at a rate of 5 °C/min with a reference temperature of 20°C, and a thermal expansion coefficient of the sample during the temperature lowering is measured. He gas is used as an atmosphere at this time. From the relationship between the temperature and the thermal expansion coefficient measured by the above method, an average value of the linear expansion coefficients from 20°C to the design temperature (for example, -165°C) can be obtained. An average value of the linear expansion coefficient of the weld metal and an average value of the linear expansion coefficient of the base metal are respectively defined as the linear expansion coefficient of the weld metal and the linear expansion coefficient of the base metal. The thermal stress may also be calculated by performing the FEM analysis using measured values of the linear expansion coefficients of the weld metal and the base metal obtained in this manner.

[Required CTOD Value Calculation Step]

In this step, a required CTOD value $\delta_0$ for preventing the low-temperature liquefied gas tank from undergoing a brittle fracture during an operation of the low-temperature liquefied gas tank is obtained by assuming a defect in the welded joint and taking into account an influence of the thermal stress. Hereinafter, a method of calculating the required CTOD value $\delta_0$ will be described using, as an example, a case where the low-temperature liquefied gas tank is an LNG tank independent Type C for a ship and a case where the low-temperature liquefied gas tank is an above-ground LNG tank.

(Required CTOD Value $\delta_0$ of Welded Joint of LNG Tank Independent Type C for Ship)

First, referring to FIGS. 5 to 9, a calculation example of a required CTOD value $\delta_0$ required for a butt-welded portion (welded joint) in a Type C tank that conforming to the IGC code specified by the International Maritime Organization will be described, taking into account the influence of the thermal stress that occurs in the butt-welded portion. The Type C tank is an LNG tank for a ship and is an independent type tank. FIG. 5 is a schematic view showing a position of an assumed defect in a butt-welded portion in the Type C tank.

As shown in FIG. 5, in a welded joint 1A, a base metal 2C and a base metal 2D, the base metal 2D and a base metal 2E, and the base metal 2E and the base metal 2C are butt-welded. The base metal 2C and the base metal 2D, and the base metal 2C and the base metal 2E are circumferentially welded (girth weld) by flux-cored arc welding or submerged arc welding, whereby a weld metal 3A is formed. The base metal 2D and the base metal 2E are seam-welded (seam weld) by flux-cored arc welding, whereby a weld metal 3B is formed.

In the calculation of the required CTOD value $\delta_0$ based on WES 2805-2011, as shown in FIG. 5, a defect 4A or a defect 4B is assumed. The defect 4A is a defect located at a fusion line between the base metal 2D and the weld metal 3B in the vicinity of a contact point between the weld metal 3A and the weld metal 3B. The defect 4B is a defect located at a fusion line between the base metal 2D and the weld metal 3B at a position away from the weld metal 3A (where an influence of the circumferential welding can be ignored). Shapes of the defect 4A and the defect 4B are surface cracks having a length (major axis) of 2c and a depth (minor axis radius) of a on a surface of a steel plate as shown in FIG. 6. Assumptions for the calculation are as follows. The positions of the defect 4A and the defect 4B are positions where relatively large thermal stresses are likely to occur in the use of the Type C LNG tank.

Plate thickness t: 25 mm or 40 mm
Defect: Major axis 2c = 1.5t, minor axis radius a = 0.5t, and t is a plate thickness.
Yield stress $\sigma_y$ of base metal at evaluation temperature (-165°C): 853 MPa
Young's modulus E: 206 GPa
Poisson's ratio v: 0.3
Welding construction error (angular distortion W + misalignment H);

Defect A (in case of plate thickness of 25 mm and in case of 40 mm): W +H = 3 mm
Defect B (in case of plate thickness of 25 mm): W + H = 10 mm
Defect B (in case of plate thickness of 40 mm): W + H = 12 mm

A value of 853 MPa of the yield stress $\sigma_y$ of the base metal at the evaluation temperature is a value set assuming 7% Ni steel.

An angular distortion amount W is the amount of bend of the welded joint 1A, and is, as shown in FIG. 7, a length from a highest position of the base metal 2D, 2E at a center position in a plate thickness direction to a crack in the welded joint 1A per unit length (1 m) in a horizontal direction. A misalignment amount H is, as shown in FIG. 7, a magnitude of a displacement in a height direction between the center position of the base metal 2D in the plate thickness direction and the center position of the base metal 2E in the plate thickness direction in the welded joint 1A.

Based on the above assumptions, a characteristic crack dimension $c_0$ of a surface crack is calculated by the following formulas. The characteristic crack dimension $c_0$ corresponds to the crack characteristic dimension in WES 2805:2011.

$$c_0 = aF_t^{\,2} \quad \cdots \text{Formula (1)}$$

The characteristic crack dimension $c_0$ is a half-length of a crack in a case where various cracks are replaced by a through-thickness crack having an equal K value (stress intensity factor). In Formula (1), Ft is a shape correction factor, and the shape correction factor $F_t$ is obtained by Formula (2).

$$F_t = \frac{F_0}{\Phi} \quad \cdots \text{Formula (2)}$$

In Formula (2), $F_0$ is obtained by Formulas (3) to (6).

$$F_0 = \left[ M_1 + M_2\left(\frac{a}{t}\right)^2 + M_3\left(\frac{a}{t}\right)^4 \right] \quad \cdots \text{Formula (3)}$$

$$M_1 = 1.13 - 0.09\left(\frac{a}{c}\right) \quad \cdots \text{Formula (4)}$$

$$M_2 = -0.54 + \frac{0.89}{0.2 + a/c} \quad \cdots \text{Formula (5)}$$

$$M_3 = 0.5 - \frac{1.0}{0.65 + a/c} + 14\left(1.0 + \frac{a}{c}\right)^{24} \quad \cdots \text{Formula (6)}$$

In addition, in Formula (2), $\Phi$ is obtained by Formula (7).

$$\Phi = \left[1 + 1.464\left(\frac{a}{c}\right)^{1.65}\right]^{1/2} \quad \cdots \text{Formula (7)}$$

Next, an evaluation strain $\varepsilon$ is obtained. The evaluation strain $\varepsilon$ is obtained by Formula (8) as a sum of a strain $\varepsilon_1$ due to a boundary force, a strain $\varepsilon_2$ due to a welding residual stress, and a strain $\varepsilon_3$ due to stress concentration.

$$\varepsilon = \varepsilon_1 + \varepsilon_2 + \varepsilon_3 \quad \cdots \text{Formula (8)}$$

The strain $\varepsilon_1$ due to the boundary force is obtained by the following formula.

$$\varepsilon_1 = \frac{1 - \nu^2}{E}\sigma_1 \quad \cdots \text{Formula (9)}$$

In Formula (9), E is the Young's modulus, v is the Poisson's ratio, and $\sigma_1$ is a stress due to the boundary force. The stress $\sigma_1$ due to the boundary force is a value obtained by adding the thermal stress obtained by the FEM analysis to an allowable stress of 230 MPa for 7% Ni steel. Since the thermal stress in the weld line direction due to the circumferential welding acts on the defect 4A, the weld line direction stress $\sigma_x$ shown in FIG. 4 is added. In the case of the defect 4B, since the thermal stress in the weld line perpendicular direction due to the seam welding acts, the weld line perpendicular direction stress $\sigma_y$ shown in FIG. 4 is added.

The strain $\varepsilon_2$ due to the welding residual stress is obtained by Formula (10) using the yield strain $\varepsilon_Y$ (=$\sigma_Y \times (1 - \nu^2)/E$) of the steel plate (base metal) and a coefficient $\alpha_R$.

$$\varepsilon_2 = \alpha_R \varepsilon_Y \quad \cdots \text{Formula (10)}$$

The coefficient $\alpha_R$ in Formula (10) is a value given depending on a type of crack and a relationship between a weld line and a direction of the crack. For the defect 4A, the coefficient $\alpha_R$ is 0.6, and for the defect 4B, the coefficient $\alpha_R$ is 0.36. These values are values described in Table 9.1 of WES 2805:2011.

The strain $\varepsilon_3$ due to the strain concentration in Formula (8) is represented by Formula (11) using an average strain concentration factor $K_\varepsilon$ and the strain $\varepsilon_1$ due to the boundary force, and the average strain concentration factor $K_\varepsilon$ is obtained by Formulas (12) to (15).

$$\varepsilon_3 = \left(K_\varepsilon - 1\right)\varepsilon_1 \quad \cdots \text{Formula (11)}$$

$$K_\varepsilon = \begin{cases} K_t & K_t\sigma_1 < \sigma_Y \\ K_t + A\left[\left(\dfrac{\varepsilon_1}{\varepsilon_Y}\right) - \left(\dfrac{1}{K_t}\right)\right] & \sigma_{net} \le \sigma_Y \le K_t\sigma_1 \end{cases} \quad \cdots \text{Formula (12)}$$

$$A = \lambda \frac{K_t^{2/(1-n)} - K_t}{1 - \left(\dfrac{\lambda}{K_t}\right)} \quad \cdots \text{Formula (13)}$$

$$n = 0.12 \ln\left(\frac{1390}{\sigma_Y}\right) \quad , \quad \sigma_Y : \text{MPa} \quad \cdots \text{Formula (14)}$$

$$\lambda = \frac{\sigma_{net}}{\sigma_1} \quad \cdots \text{Formula (15)}$$

Kt in Formula (12) is an average elastic stress concentration factor, and $\sigma_{net}$ is a stress on an actual cross section excluding a crack size. In the present embodiment, since the defects can be regarded as sufficiently small compared to member dimensions, $\sigma_{net} = \sigma_1$ is set. Therefore, in Formula (15), $\lambda = 1$.

The average elastic stress concentration factor $K_t$ of a butt-welded joint having misalignment and angular distortion can be obtained by Formula (16).

$$K_t = \begin{cases} 1 + \left\{\dfrac{3(W+H)}{t}\right\} & a \le 0.5t \\ 1 + \left\{\dfrac{3(W+H)}{2t}\right\} & a > 0.5t \end{cases} \quad \cdots \text{Formula (16)}$$

The required CTOD value $\delta_0$ is represented by Formula (17) using the characteristic crack dimension $c_0$ and the evaluation strain $\varepsilon$ obtained as described above.

$$\delta_0 = \begin{cases} \varepsilon_Y c_0 \left(\dfrac{\pi}{2}\right)\left(\dfrac{\varepsilon}{\varepsilon_Y}\right)^2 & \varepsilon/\varepsilon_Y < 1.0 \\ \varepsilon_Y c_0 \left(\dfrac{\pi}{8}\right)\left[9\left(\dfrac{\varepsilon}{\varepsilon_Y}\right) - 5\right] & \varepsilon/\varepsilon_Y \ge 1.0 \end{cases} \quad \cdots \text{Formula (17)}$$

In this manner, by assuming defects in the welded joint and taking into account the influence of the thermal stress, the required CTOD value $\delta_0$ for preventing the low-temperature liquefied gas tank from undergoing a brittle fracture during the operation of the Type C LNG tank is calculated. Therefore, the required CTOD value $\delta_0$ may be calculated using Formula (17).

FIGS. 8 and 9 show the required CTOD value $\delta_0$ calculated from Formula (17). FIG. 8 is a graph showing a relationship between the linear expansion coefficient ratio Tw/Tb and the required CTOD value $\delta_0$ for each defect position in a case where the plate thickness is 25 mm in the LNG tank independent Type C for a ship. FIG. 9 is a graph showing a relationship between the linear expansion coefficient ratio Tw/Tb and the required CTOD value $\delta_0$ for each defect position in a case where the plate thickness is 40 mm in the LNG tank independent Type C for a ship. As shown in FIGS. 8 and 9, the defect 4A has a larger required CTOD value $\delta_0$ than the defect 4B. Therefore, it is possible to prevent a brittle fracture from occurring in the welded portion by selecting a combination of the base metal and the weld metal that satisfies the required CTOD value $\delta_0$ of the defect 4A. Therefore, in a case where the plate thickness is 25 mm, by using an approximation formula for the defect 4A in FIG. 8 so that the CTOD value $\delta$ satisfies Formula (18), it is possible to prevent a brittle fracture from occurring in the welded portion. In addition, in a case where the plate thickness is 40 mm, by using an approximation formula for the defect 4A in FIG. 9 so that the CTOD value $\delta$ satisfies Formula (19), it is possible to prevent a brittle fracture from occurring in the welded portion.

$$\delta \geqq 0.001 \times (Tw/Tb)^2 + 0.057 \times (Tw/Tb) + 0.0035 \quad \cdots \text{Formula (18)}$$

$$\delta \geqq 0.0038 \times (Tw/Tb)^2 + 0.074 \times (Tw/Tb) + 0.003 \quad \cdots \text{Formula (19)}$$

(Required CTOD Value $\delta_0$ of Welded Joint of Above-ground LNG Tank)

Next, referring to FIGS. 10 to 14, a calculation example of a required CTOD value $\delta_0$ required for a butt-welded portion (welded joint) in the above-ground LNG tank will be described. FIG. 10 is a schematic view showing an example of the above-ground LNG tank. As shown in FIG. 10, the above-ground LNG tank is a cylindrical tank disposed on the ground and is a tank configured to be covered from above. An inner tank material of the above-ground LNG tank has a welded joint 1B. In the welded joint 1B, a base metal 2F and a base metal 2G, the base metal 2G and a base metal 2H, and the base metal 2H and the base metal 2G are butt-welded. The base metal 2F and the base metal 2G, and the base metal 2F and the base metal 2H are each circumferentially welded by submerged arc welding, whereby a weld metal 3C is formed. The base metal 2G and the base metal 2H are welded in a vertical direction by shielded metal arc welding or gas tungsten arc welding, whereby a weld metal 3D is formed.

In the calculation of the required CTOD value $\delta_0$ based on WES 2805-2011, as shown in FIG. 11, a defect 4C or a defect 4D is assumed. The defect 4C is a defect located at a fusion line between the base metal 2G and the weld metal 3D in the vicinity of a contact point between the weld metal 3C and the weld metal 3D. The defect 4D is a defect disposed at a position away from the weld metal 3C (where an influence of the circumferential welding can be ignored) in the fusion line between the base metal 2G and the weld metal 3D. Shapes of the defect 4C and the defect 4D are semi-elliptical surface cracks having a length (major axis) of 2c (= 1.5t) and a depth (minor axis radius) of a (= 0.25t) on a surface of a steel plate as shown in FIG. 12. Assumptions for the calculation are as follows.

Plate thickness t: 25 mm or 50 mm
Defect: Major axis 2c = 1.5t, minor axis radius a = 0.25t, and t is a plate thickness.
Yield stress $\sigma_y$ of base metal at evaluation temperature (-165°C): 853 MPa
Young's modulus E: 206 GPa
Poisson's ratio v: 0.3
Welding construction error (angular distortion W + misalignment H);

Defect 4C (in case of plate thickness of 25 mm and in case of plate thickness of 50 mm): W = 3 mm, H = 0 mm
Defect 4D (in case of plate thickness of 25 mm): W = 10 mm, H = 0 mm
Defect 4D (in case of plate thickness of 50 mm): W = 12 mm, H = 0 mm

A value of 853 MPa of the yield stress $\sigma_y$ of the base metal at the evaluation temperature is a value set assuming 7% Ni steel.

The characteristic crack dimension $c_0$ is calculated by Formulas (1) to (7). The evaluation strain $\varepsilon$ is calculated by

Formula (8). In Formula (8), the strain $\varepsilon_1$ due to the boundary force is calculated by Formula (9). The stress $o_1$ due to the boundary force is calculated Formulas (20) to (23) using a tensile stress $\sigma_t$ = 352.5 MPa and a bending stress $\sigma_b$ = 51 MPa of an evaluation portion for the level 2 earthquake motion, with reference to Non-Patent Document 1. In Formula (20), $H_t$ is set to 1. In Formulas (21) to (23), a is a depth of the defect, t is the plate thickness, and c is a half-length of the defect on the plate surface.

$$\sigma_1 = H_t\sigma_t + H_b\sigma_b \quad \cdots \text{Formula (20)}$$

$$H_b = 1 + G_1\left(\frac{a}{t}\right) + G_2\left(\frac{a}{t}\right)^2 \quad \cdots \text{Formula (21)}$$

$$G_1 = -1.22 - 0.12\left(\frac{a}{c}\right) \quad \cdots \text{Formula (22)}$$

$$G_2 = 0.55 - 1.05\left(\frac{a}{c}\right)^{0.75} + 0.47\left(\frac{a}{c}\right)^{1.5} \quad \cdots \text{Formula (23)}$$

The strain $\varepsilon_2$ due to the welding residual stress in Formula (8) is obtained by Formula (24).

$$\varepsilon_2 = \sigma_R \times \left(1 - \nu^2\right) / E \quad \cdots \text{Formula (24)}$$

In Formula (24), $\sigma_R$ is a residual stress. For the defect 4C, $\sigma_R$ = 280 MPa is set, and for the defect 4D, $\sigma_R$ = 168 MPa is set.

The strain $\varepsilon_3$ due to the stress concentration in Formula (8) is obtained by Formulas (11) to (16). Then, from Formula (17), the required CTOD value $\delta_0$ of the welded joint 1B in the LNG tank is obtained.

In this manner, by assuming defects in the welded joint and taking into account the influence of the thermal stress, the required CTOD value $\delta_0$ for preventing the low-temperature liquefied gas tank from undergoing a brittle fracture during the operation of the above-ground LNG tank is calculated.

FIGS. 13 and 14 show the required CTOD value $\delta_0$ calculated from Formula (17). FIG. 13 is a graph showing a relationship between the linear expansion coefficient ratio Tw/Tb and the required CTOD value $\delta_0$ for each defect position in a case where the plate thickness is 25 mm in the above-ground LNG tank. FIG. 14 is a graph showing a relationship between the linear expansion coefficient ratio Tw/Tb and the required CTOD value $\delta_0$ for each defect position in a case where the plate thickness is 50 mm in the above-ground LNG tank. As shown in FIGS. 13 and 14, the defect 4C has a larger required CTOD value $\delta_0$ than the defect 4D. Therefore, it is possible to prevent a brittle fracture from occurring in the welded portion by selecting a combination of the base metal and the weld metal that satisfies the required CTOD value $\delta_0$ of the defect 4D. Therefore, in a case where the plate thickness is 25 mm, by using an approximation formula for the defect 4D in FIG. 13 so that the CTOD value $\delta$ satisfies Formula (25), it is possible to prevent a brittle fracture from occurring in the welded portion. In addition, in a case where the plate thickness is 50 mm, by using an approximation formula for the defect 4D in FIG. 14 so that the CTOD value $\delta$ satisfies Formula (26), it is possible to prevent a brittle fracture from occurring in the welded portion.

$$\delta \geqq 0.0153 \times \left(Tw/Tb\right)^2 + 0.0274 \times \left(Tw/Tb\right) + 0.0135 \quad \cdots \text{Formula (25)}$$

$$\delta \geqq 0.03\times\left(Tw/Tb\right)^2-0.024\times\left(Tw/Tb\right)+0.0694 \quad \cdots \text{Formula (26)}$$

[CTOD Value Measurement Step]

In this step, the CTOD value of the heat-affected zone of the welded joint at the use temperature of the low-temperature liquefied gas tank is measured. A CTOD test is performed in accordance with ISO 15653-2018. Specifically, a three-point bend test piece in which a plate thickness of the test piece is the plate thickness t of the tank and a width of the test piece is t to 2t can be used. Three test pieces each with notches introduced at the fusion line and at positions of 1, 3, and 5 mm from the fusion line toward a base metal side are prepared. The test piece is cooled to the use temperature of the low-temperature liquefied gas tank and the CTOD test is conducted. A smallest value among the 12 measured CTOD values is used as the CTOD value of the heat-affected zone of the welded joint.

[Welding Step]

In this step, the base metal is welded using a thick steel plate in which the CTOD value $\delta$ of the heat-affected zone is confirmed to be equal to or more than the required CTOD value $\delta_0$, as the base metal. For example, a thick steel plate in which the CTOD value $\delta$ satisfies Formula (18), Formula (19), Formula (25), or Formula (26) is used as the base metal.

A welding material is selected in consideration of the above-described linear expansion coefficient. For example, the welding material is selected so that the linear expansion coefficient ratio Tw/Tb is more than 1 and less than 2.2. The welding material is, for example, a Ni-based alloy or steel. The welding material preferably contains, by mass%, Mn: 5.0% to 20.0%, Ni: 5.0% to 30.0%, and a remainder: Fe, optional elements, and impurities. With the welding material containing Mn: 5.0% to 15.0%, Ni: 5.0% to 20.0%, and a remainder: Fe, optional elements, and impurities, a manufacturing cost can be further reduced.

A welding method is not particularly limited, and a method of welding a welded joint used for an inner tank of a low-temperature liquefied gas tank may be adopted as appropriate. For example, gas-shielded arc welding using a flux-cored wire and submerged arc welding using a solid wire and a flux are adopted. In addition, in some cases, shielded arc welding, simple electrogas arc welding, electroslag welding, TIG welding, and gas-shielded welding using a solid wire may be adopted.

The flux-cored wire is manufactured by supplying a flux into an open tube made of a steel strip formed into a U-shape through an opening portion, then buttwelding the opening portion, and performing wire drawing thereon. There are cases where a heat treatment is performed during the wire drawing. The solid wire is manufactured by performing wire drawing on steel processed into a bar shape through forging and rolling after melting.

Thus far, the method of manufacturing a welded joint according to the present embodiment has been described. According to the present embodiment, since the base metal in which the CTOD value $\delta$ of the heat-affected zone is equal to or more than the required CTOD value $\delta_0$ for preventing the low-temperature liquefied gas tank from undergoing a brittle fracture during the operation of the low-temperature liquefied gas tank is used, the brittle fracture can be prevented. In addition, the weld metal having a linear expansion coefficient larger than the linear expansion coefficient of the base metal contains a smaller amount of expensive elements than a weld metal having a linear expansion coefficient smaller than the linear expansion coefficient of the base metal. Therefore, the welded joint can be manufactured at a lower cost.

<Welded Joint>

A welded joint according to the embodiment of the present invention is a welded joint that is used for an inner tank of a low-temperature liquefied gas tank, the welded joint including: a base metal; and a weld metal, in which a linear expansion coefficient of the weld metal is larger than a linear expansion coefficient of the base metal, and a CTOD value at a use temperature of the low-temperature liquefied gas tank is equal to or more than a required CTOD value which takes into account an influence of a thermal stress that occurs due to a difference between the linear expansion coefficient of the weld metal and the linear expansion coefficient of the base metal.

[Base metal]

As the base metal, a material in which the CTOD value at the use temperature of the low-temperature liquefied gas tank is equal to or more than the required CTOD value which takes into account the influence of the thermal stress that occurs due to the difference between the linear expansion coefficient of the weld metal and the linear expansion coefficient of the base metal is used. With a base metal containing 0.1 to 5.0 mass% of Mn and 6.0 to 16.0 mass% of Ni, strength at an extremely low temperature can be further increased. Therefore, it is preferable that the base metal contains 0.1 to 5.0 mass% of Mn and 6.0 to 16.0 mass% of Ni. A Mn content of the base metal is more preferably 0.3 mass% or more, 0.4 mass% or more, or 0.5 mass% or more. In addition, the Mn content of the base metal is more preferably 3.0 mass% or less, 2.0 mass% or less, or 1.5 mass% or less. A Ni content of the base metal is more preferably 7 mass% or more. In addition, the Ni content of the base metal is more preferably 10 mass% or less. A remainder of a chemical composition of the base metal includes Fe, optional elements, and impurities.

Examples of the optional elements include C, Si, Cu, Cr, Mo, W, Co, B, Nb, V, Ti, Zr, N, Al, Ca, REM, Mg, Sn, Te, and Se. C, Si, Cu, Cr, Mo, W, Co, B, Nb, V, Ti, Zr, and N are elements that increase the strength. Al, Ca, REM, and Mg are elements used for deoxidation and morphology control of inclusions. Sn, Te, and Se are elements that increase corrosion resistance. Amounts of the elements may be set to, for example, by mass%, C: 0.08% or less, Si: 0.5% or less, Cu: 1% or less, Cr: 1% or less, Mo: 1% or less, Nb: 0.1% or less, V: 0.1% or less, Co: 1% or less, Sn: 0.1% or less, W: 0.1% or less, Mg: 0.1% or less, Al: 0.1% or less, Ca: 0.01% or less, Ti: 0.1% or less, B: 0.01% or less, REM: 0.01% or less, Zr: 0.01% or less, N: 0.01% or less, Te: 0.1% or less, and Se: 0.1% or less. Since the optional elements need not be included, a lower limit of the amount of each of the optional elements is 0%.

Examples of the impurities include P, S, O, and other impurities such as Sb, As, and Zn, which may be mixed from scraps and the like. A P content may be 0.05 mass% or less, and an amount of each of the other impurities may be 0.01 mass% or less.

For manufacturing of the base metal, for example, a steel piece manufactured by melting and continuous casting of steel is used. The base metal is manufactured by, for example, performing hot rolling and a heat treatment on the steel piece. After the hot rolling, accelerated cooling such as water cooling may be performed.

A thickness of the base metal is, for example, 6 to 50 mm. In a case of a tank for a ship, the thickness may be 25 mm or less, or more than 25 mm and 40 mm or less. In a case of an above-ground tank, the thickness may be 25 mm or less, or more than 25 mm and 50 mm or less. The plate thickness varies depending on a size or part of the tank. In general, a thick material of more than 25 mm and 50 mm or less is mainly used in a case of a large tank, and a thin material of 25 mm or less is mainly used in a case of a small tank. Therefore, the thickness of the base metal may be 50 mm or less, 40 mm or less, or 25 mm or less. In addition, the thickness of the base metal may be 6 mm or more, 10 mm or more, 15 mm or more, or more than 25 mm.

[Weld Metal]

The weld metal preferably contains, by mass%, Mn: 5.0% to 20.0%, Ni: 5.0% to 30.0%, and a remainder: Fe, optional elements, and impurities. With the welding material containing Mn: 5.0% to 20.0% and Ni: 5.0% to 30.0%, the manufacturing cost can be further reduced. The weld metal more preferably contains Mn: 5.0% to 15.0% and Ni: 5.0% to 20.0%.

Examples of the optional elements include C, Mo, W, Nb, V, Co, Cu, Cr, B, N, Pb, Sn, Si, Al, Ti, Mg, Ca, REM, and Zr. C, Mo, W, Nb, V, and Co are elements that increase the strength. Cu, Cr, B, and N are elements that increase stability of austenite. Pb is an element that enhances machinability. Sn is an element that enhances the corrosion resistance. Si, Al, Ti, Mg, and Ca are elements used for deoxidation or morphology control of inclusions. REM and Zr are elements that enhance welding workability. Amounts of the elements may be set to, for example, by mass%, C: 1% or less, Mo: 22% or less, W: 20% or less, Nb: 3% or less, V: 1% or less, Co: 1% or less, Cu: 5% or less, Cr: 20% or less, B: 0.5% or less, N: 0.5% or less, Pb: 1% or less, Sn: 1% or less, Si: 0.75% or less, Al: 0.1% or less, Ti: 0.1% or less, Mg: 5% or less, Ca: 5% or less, REM: 0.5% or less, and Zr: 0.5% or less. Since the optional elements need not be included, a lower limit of the amount of each of the optional elements is 0%.

Examples of the impurities include P, S, and O. Amounts of the impurities may be set to P: 0.05 mass% or less, S: 0.05 mass% or less, and O: 0.15 mass% or less.

In the welded joint according to the present embodiment, the linear expansion coefficient ratio Tw/Tb is preferably more than 1 and less than 2.2. As the linear expansion coefficient ratio Tw/Tb approaches 1, the thermal stress that occurs becomes smaller. However, in this case, the welded joint contains a large amount of Ni. In order to reduce the Ni content and the manufacturing cost of the welded joint, the linear expansion coefficient ratio Tw/Tb is more preferably 1.2 or more, and even more preferably 1.3 or more. On the other hand, when the linear expansion coefficient ratio Tw/Tb is too large, the thermal stress increases and the required CTOD value $\delta_0$ increases. Therefore, in order to secure toughness of the heat-affected zone, it is necessary to add a large amount of Ni to the base metal or the like, and as a result, the manufacturing cost of the welded joint increases. In addition, when the linear expansion coefficient ratio Tw/Tb is less than 2.2, a brittle fracture from the welded portion can be sufficiently suppressed. Therefore, the linear expansion coefficient ratio Tw/Tb is preferably less than 2.2, more preferably 2.0 or less, and even more preferably 1.6 or less. In a case where the base metal is 9% Ni steel (linear expansion coefficient is $9.2 \times 10^{-6}$) and the welding material is 13Mn%-13Ni% (linear expansion coefficient is $12.5 \times 10^{-6}$), the linear expansion coefficient ratio Tw/Tb is 1.4.

The welded joint according to the present embodiment can be manufactured by the method of manufacturing a welded joint described above.

Thus far, the welded joint according to the present embodiment has been described. According to the present embodiment, in the base metal of the welded joint, the CTOD value $\delta$ of the heat-affected zone is equal to or more than the required CTOD value $\delta_0$ for preventing the low-temperature liquefied gas tank from undergoing a brittle fracture during the operation of the low-temperature liquefied gas tank. Therefore, a brittle fracture can be prevented. For example, the CTOD value at the use temperature of the low-temperature liquefied gas tank may be equal to or more than the required CTOD value $\delta_0$ calculated by Formula (17). In addition, the weld metal having a linear expansion coefficient larger than the linear expansion coefficient of the base metal contains a smaller amount of expensive elements than a weld metal having a linear expansion coefficient smaller than the linear expansion coefficient of the base metal. Therefore, the welded joint according to the present embodiment is cheaper than a welded joint in which an existing Ni-based welding material is used.

<Method of Designing Low-Temperature Liquefied Gas Tank>

A method of designing the welded joint described above can be applied to design of a low-temperature liquefied gas tank. Therefore, as an embodiment of the present invention, there is a method of designing a low-temperature liquefied gas tank, and the method of designing a low-temperature liquefied gas tank is a method of designing a low-temperature liquefied gas tank having a butt-welded portion configured to include a base metal and a weld metal in an inner tank, the method including: a thermal stress calculation step of obtaining a thermal stress that occurs in the butt-welded portion due to a difference between a linear expansion coefficient of the weld metal and a linear expansion coefficient of the base metal at a use temperature of the low-temperature liquefied gas tank; a required CTOD value calculation step of obtaining a required CTOD value for preventing the low-temperature liquefied gas tank from undergoing a brittle fracture during an operation of the low-temperature liquefied gas tank by assuming a defect in the butt-welded portion and taking into account an influence of the thermal stress; and a base metal selection step of selecting the base metal so that a CTOD value of a heat-affected zone is equal to or more than the required CTOD value.

<Low-Temperature Liquefied Gas Tank>

The above-described welded joint can be applied to the inner tank of the low-temperature liquefied gas tank. Therefore, as an embodiment of the present invention, there is a low-temperature liquefied gas tank, and the low-temperature liquefied gas tank is a low-temperature liquefied gas tank including: a butt-welded portion configured to include a base metal and a weld metal in an inner tank, in which a CTOD value of the butt-welded portion at a use temperature of the low-temperature liquefied gas tank is equal to or more than a required CTOD value which takes into account an influence of a thermal stress that occurs in the butt-welded portion due to a difference between a linear expansion coefficient of the weld metal and a linear expansion coefficient of the base metal. The low-temperature liquefied gas tank according to the present embodiment may be an LNG tank.

In a case where the low-temperature liquefied gas tank is an LNG tank for a ship and a plate thickness of an inner tank material is 25 mm or less, it is preferable that a CTOD value $\delta$ at -165°C of a butt-welded portion of the inner tank material satisfies Formula (18) and Formula (27).

$$1 < Tw/Tb < 2.2 \quad \cdots \text{Formula (27)}$$

In a case where the low-temperature liquefied gas tank is an LNG tank for a ship and a plate thickness of an inner tank material is more than 25 mm and 40 mm or less, it is preferable that a CTOD value $\delta$ at -165°C of a butt-welded portion of the inner tank material satisfies Formula (19) and Formula (27).

In a case where the low-temperature liquefied gas tank is an above-ground LNG tank and a plate thickness of an inner tank material is 25 mm or less, it is preferable that a CTOD value $\delta$ at -165°C of a butt-welded portion of the inner tank material satisfies Formula (25) and Formula (27).

In a case where the low-temperature liquefied gas tank is an above-ground LNG tank and a plate thickness of an inner tank material is more than 25 mm and 50 mm or less, it is preferable that a CTOD value $\delta$ at -165°C of a butt-welded portion of the inner tank material satisfies Formula (26) and Formula (27).

While the present invention has been described above based on the embodiment of the present invention, the present invention is not limited thereto. The above description is merely an example, and any element having substantially the same configuration as that of the technical idea described in the claims of the present invention and exhibiting the same operational effects belongs to the technical scope of the present invention.

For example, the low-temperature liquefied gas tank is not limited to the LNG tank, and may be a gas tank that stores a low-temperature liquefied gas other than LNG. The low-temperature liquefied gas tank may be, for example, a liquefied hydrogen storage tank that stores liquefied hydrogen. Even in a case where the low-temperature liquefied gas tank is a liquefied hydrogen storage tank, as described above, the CTOD value $\delta$ in the unit of mm at a use temperature of a part or an entirety of the butt-welded portion may be equal to or more than the required CTOD value $\delta_0$ which takes into account the influence of thermal stress that occurs in the butt-welded portion due to a difference between the linear expansion coefficient of the weld metal and the linear expansion coefficient of the base metal. For example, the CTOD value at the use temperature of the low-temperature liquefied gas tank may be equal to or more than the required CTOD value $\delta_0$ calculated by Formula (17). Accordingly, even in a case where a low-cost welding material having a large linear expansion coefficient is used for the liquefied hydrogen storage tank, a brittle fracture from a welded portion can be suppressed.

In addition, for example, in the thermal stress calculation step in the method of manufacturing a welded joint described above, the thermal stress that occurs in the welded joint due to the difference between the linear expansion coefficient of the weld metal and the linear expansion coefficient of the base metal at the use temperature of the low-temperature liquefied gas tank is calculated by the FEM analysis. However, the thermal stress may be calculated by a method other than the FEM analysis.

In addition, the linear expansion coefficient of the base metal and the linear expansion coefficient of the weld metal are values determined by the chemical compositions thereof, and the values of the linear expansion coefficients described in a known document may be adopted or the values may be measured by an experiment.

In addition, the position of the defect assumed in the required CTOD value calculation step in the method of manufacturing a welded joint described above may be determined based on a result of a preliminary analysis of positions where relatively large thermal stresses occur, such as a thermal stress analysis using FEM.

[Examples]

A case where the base metal of the welded joint of the LNG tank independent Type C for a ship was 7% Ni steel (linear expansion coefficient Tb was $9.2 \times 10^{-6}$ [1/°C]) and the welding material was 13Mn%-13Ni% (linear expansion coefficient Tw was $12.5 \times 10^{-6}$ [1/°C]) was assumed. In this case, the linear expansion coefficient ratio Tw/Tb was 1.4. As shown in FIG. 5, the defect 4A or the defect 4B was assumed. The shapes of the defects 4A and 4B were semi-elliptical surface cracks having a length (major axis) of 2c and a depth (minor axis radius) of a on the surface of the steel plate as shown in FIG. 6. The following conditions were assumed, and the required CTOD value was obtained in a case where the linear expansion coefficient was considered (present invention example) and in a case where the linear expansion coefficient was not considered (related art).

Plate thickness t: 40 mm
Defect: Major axis 2c = 1.5t, minor axis radius a = 0.5t, and t is a plate thickness.
Yield stress $\sigma_y$ of base metal at evaluation temperature (-165°C): 853 MPa
Young's modulus E: 206 GPa
Poisson's ratio v: 0.3
Welding construction error (angular distortion W + misalignment H);

Defect A: W + H = 3 mm
Defect B: W + H = 12 mm

Acting stress: 230 MPa

Calculation results of the required CTOD value are shown in Table 2. The required CTOD value according to the present invention example in which the linear expansion coefficient was considered was 33% to 41% higher than the required CTOD value according to the related art in which the linear expansion coefficient was not considered. That is, when a welding material having a low Ni content and a large linear expansion coefficient is used, a thermal stress occurs due to an influence of a difference in linear expansion coefficient from the base metal. However, it was found that the thermal stress was not considered in the related art and therefore the required CTOD value was underestimated.

[Table 2]

| | Required CTOD Value [mm] | |
|---|---|---|
| | Case Where Linear Expansion Coefficient Was Considered (Present Invention Example) | Case Where Linear Expansion Coefficient Was Not Considered (Related Art) |
| Defect A | 0.114 | 0.081 |
| Defect B | 0.095 | 0.071 |

Brief Description of the Reference Symbols

1, 1A, 1B Welded joint

2A, 2B, 2C, 2D, 2E, 2F, 2G, 2H Base metal

3, 3A, 3B, 3C, 3D Weld metal

4A, 4B, 4C, and 4D Defect

## Claims

1. A method of manufacturing a welded joint that is used for an inner tank of a low-temperature liquefied gas tank and in which a linear expansion coefficient of a weld metal is larger than a linear expansion coefficient of a base metal, the method comprising:

   obtaining a thermal stress that occurs in the welded joint due to a difference between the linear expansion coefficient of the weld metal and the linear expansion coefficient of the base metal at a use temperature of the low-temperature liquefied gas tank;
   obtaining a required CTOD value for preventing the low-temperature liquefied gas tank from undergoing a brittle fracture during an operation of the low-temperature liquefied gas tank by assuming a defect in the welded joint and taking into account an influence of the thermal stress;
   measuring a CTOD value of a heat-affected zone of the welded joint at the use temperature of the low-temperature liquefied gas tank; and
   welding the base metal by using a thick steel plate in which the CTOD value of the heat-affected zone is confirmed to be equal to or more than the required CTOD value, as the base metal.

2. A welded joint that is used for an inner tank of a low-temperature liquefied gas tank, the welded joint comprising:

   a base metal; and
   a weld metal,
   wherein a linear expansion coefficient of the weld metal is larger than a linear expansion coefficient of the base metal, and,
   a CTOD value at a use temperature of the low-temperature liquefied gas tank is equal to or more than a required CTOD value which takes into account an influence of a thermal stress that occurs due to a difference between the linear expansion coefficient of the weld metal and the linear expansion coefficient of the base metal.

3. The welded joint according to claim 2,

   wherein the CTOD value at the use temperature of the low-temperature liquefied gas tank is equal to or more than a required CTOD value $\delta_0$ calculated by Formula (1),
   in Formula (1),
   $c_0$: a characteristic crack dimension,
   $\varepsilon_Y$: a yield strain of the base metal, and
   $\varepsilon$: an evaluation strain.

$$\delta_0 = \begin{cases} \varepsilon_Y c_0 \left(\frac{\pi}{2}\right)\left(\frac{\varepsilon}{\varepsilon_Y}\right)^2 & \varepsilon/\varepsilon_Y < 1.0 \\ \varepsilon_Y c_0 \left(\frac{\pi}{8}\right)\left[9\left(\frac{\varepsilon}{\varepsilon_Y}\right) - 5\right] & \varepsilon/\varepsilon_Y \geq 1.0 \end{cases} \quad \cdots \text{Formula (1)}$$

**4.** A method of designing a low-temperature liquefied gas tank having a butt-welded portion configured to include a base metal and a weld metal in an inner tank, the method comprising:

obtaining a thermal stress that occurs in the butt-welded portion due to a difference between a linear expansion coefficient of the weld metal and a linear expansion coefficient of the base metal at a use temperature of the low-temperature liquefied gas tank;
obtaining a required CTOD value for preventing the low-temperature liquefied gas tank from undergoing a brittle fracture during an operation of the low-temperature liquefied gas tank by assuming a defect in the butt-welded portion and taking into account an influence of the thermal stress; and
selecting the base metal so that a CTOD value of a heat-affected zone is equal to or more than the required CTOD value.

**5.** A low-temperature liquefied gas tank comprising:

a butt-welded portion configured to include a base metal and a weld metal in an inner tank,
wherein a CTOD value of the butt-welded portion at a use temperature of the low-temperature liquefied gas tank is equal to or more than a required CTOD value which takes into account an influence of a thermal stress that occurs in the butt-welded portion due to a difference between a linear expansion coefficient of the weld metal and a linear expansion coefficient of the base metal.

**6.** The low-temperature liquefied gas tank according to claim 5,

wherein the CTOD value of the butt-welded portion at the use temperature of the low-temperature liquefied gas tank is equal to or more than a required CTOD value $\delta_0$ calculated by Formula (2),
in Formula (2),
$c_0$: a characteristic crack dimension,
$\varepsilon_Y$: a yield strain of the base metal, and
$\varepsilon$: an evaluation strain.

$$\delta_0 = \begin{cases} \varepsilon_Y c_0 \left(\frac{\pi}{2}\right)\left(\frac{\varepsilon}{\varepsilon_Y}\right)^2 & \varepsilon/\varepsilon_Y < 1.0 \\ \varepsilon_Y c_0 \left(\frac{\pi}{8}\right)\left[9\left(\frac{\varepsilon}{\varepsilon_Y}\right) - 5\right] & \varepsilon/\varepsilon_Y \geq 1.0 \end{cases} \quad \cdots \text{Formula (2)}$$

**7.** The low-temperature liquefied gas tank according to claim 5 or 6, wherein the low-temperature liquefied gas tank is an LNG tank.

**8.** The low-temperature liquefied gas tank according to claim 7,

wherein the low-temperature liquefied gas tank is an LNG tank for a ship, and
a CTOD value $\delta$ at -165°C of the butt-welded portion of an inner tank material having a plate thickness of 25 mm or less satisfies Formula (3) and Formula (4),

$$\delta \geq 0.001 \times (Tw/Tb)^2 + 0.057 \times (Tw/Tb) + 0.0035 \ldots \text{Formula (3)}$$

$$1 < Tw/Tb < 2.2 \ldots \text{Formula (4)}$$

in Formula (3) and Formula (4), Tw is the linear expansion coefficient [1/°C] of the weld metal, and Tb is the linear expansion coefficient *[1/°C]* of the base metal.

**9.** The low-temperature liquefied gas tank according to claim 7,

wherein the low-temperature liquefied gas tank is an LNG tank for a ship, and
a CTOD value δ at -165°C of the butt-welded portion of an inner tank material having a plate thickness of more than 25 mm and 40 mm or less satisfies Formula (5) and Formula (6),

$$\delta \geq 0.0038 \times (Tw/Tb)^2 + 0.074 \times (Tw/Tb) + 0.003 \ldots \text{Formula (5)}$$

$$1 < Tw/Tb < 2.2 \ldots \text{Formula (6)}$$

in Formula (5) and Formula (6), Tw is the linear expansion coefficient [1/°C] of the weld metal, and Tb is the linear expansion coefficient [1/°C] of the base metal.

**10.** The low-temperature liquefied gas tank according to claim 7,

wherein the low-temperature liquefied gas tank is an above-ground LNG tank, and
a CTOD value δ at -165°C of the butt-welded portion of an inner tank material having a plate thickness of 25 mm or less satisfies Formula (7) and Formula (8),

$$\delta \geq 0.0153 \times (Tw/Tb)^2 + 0.0274 \times (Tw/Tb) + 0.0135 \ldots \text{Formula (7)}$$

$$1 < Tw/Tb < 2.2 \ldots \text{Formula (8)}$$

in Formula (7) and Formula (8), Tw is the linear expansion coefficient [1/°C] of the weld metal, and Tb is the linear expansion coefficient [1/°C] of the base metal.

**11.** The low-temperature liquefied gas tank according to claim 7,

wherein the low-temperature liquefied gas tank is an above-ground LNG tank, and
a CTOD value δ at -165°C of the butt-welded portion of an inner tank material having a plate thickness of more than 25 mm and 50 mm or less satisfies Formula (9) and Formula (10),

$$\delta \geq 0.03 \times (Tw/Tb)^2 - 0.024 \times (Tw/Tb) + 0.0694 \ldots \text{Formula (9)}$$

$$1 < Tw/Tb < 2.2 \ldots \text{Formula (10)}$$

in Formula (9) and Formula (10), Tw is the linear expansion coefficient [1/°C] of the weld metal, and Tb is the linear expansion coefficient [1/°C] of the base metal.

**12.** The low-temperature liquefied gas tank according to claim 5 or 6,
wherein the base metal contains, by mass%, Mn: 0.1% to 5.0%, and Ni: 6.0% to 16.0%.

**13.** The low-temperature liquefied gas tank according to claim 5 or 6,
wherein the weld metal contains, by mass%, Mn: 5.0% to 20.0%, and Ni: 5.0% to 30.0%.

**14.** The low-temperature liquefied gas tank according to claim 12, wherein the weld metal contains, by mass%, Mn: 5.0% to 20.0%, and Ni: 5.0% to 30.0%.

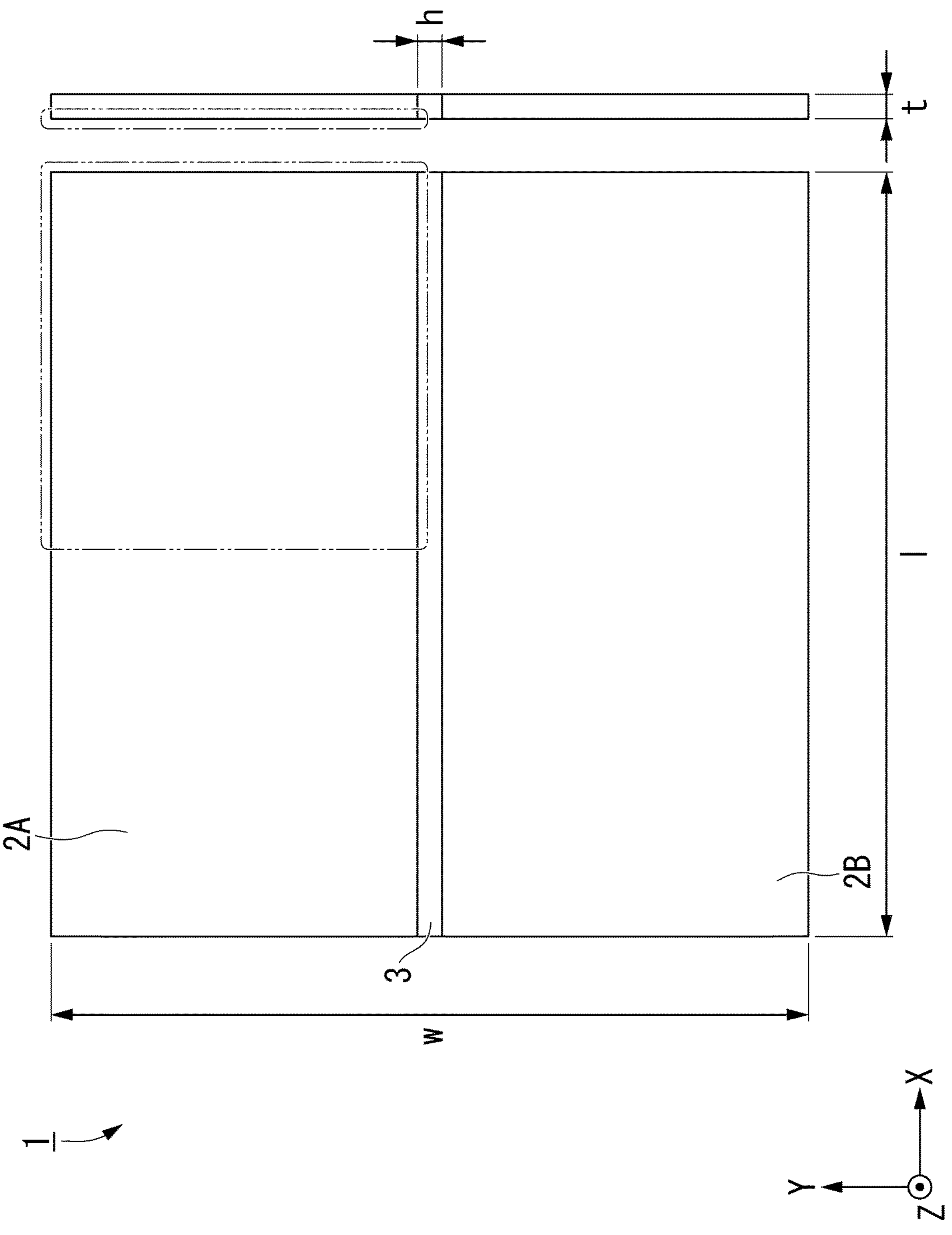


FIG. 1

FIG. 2

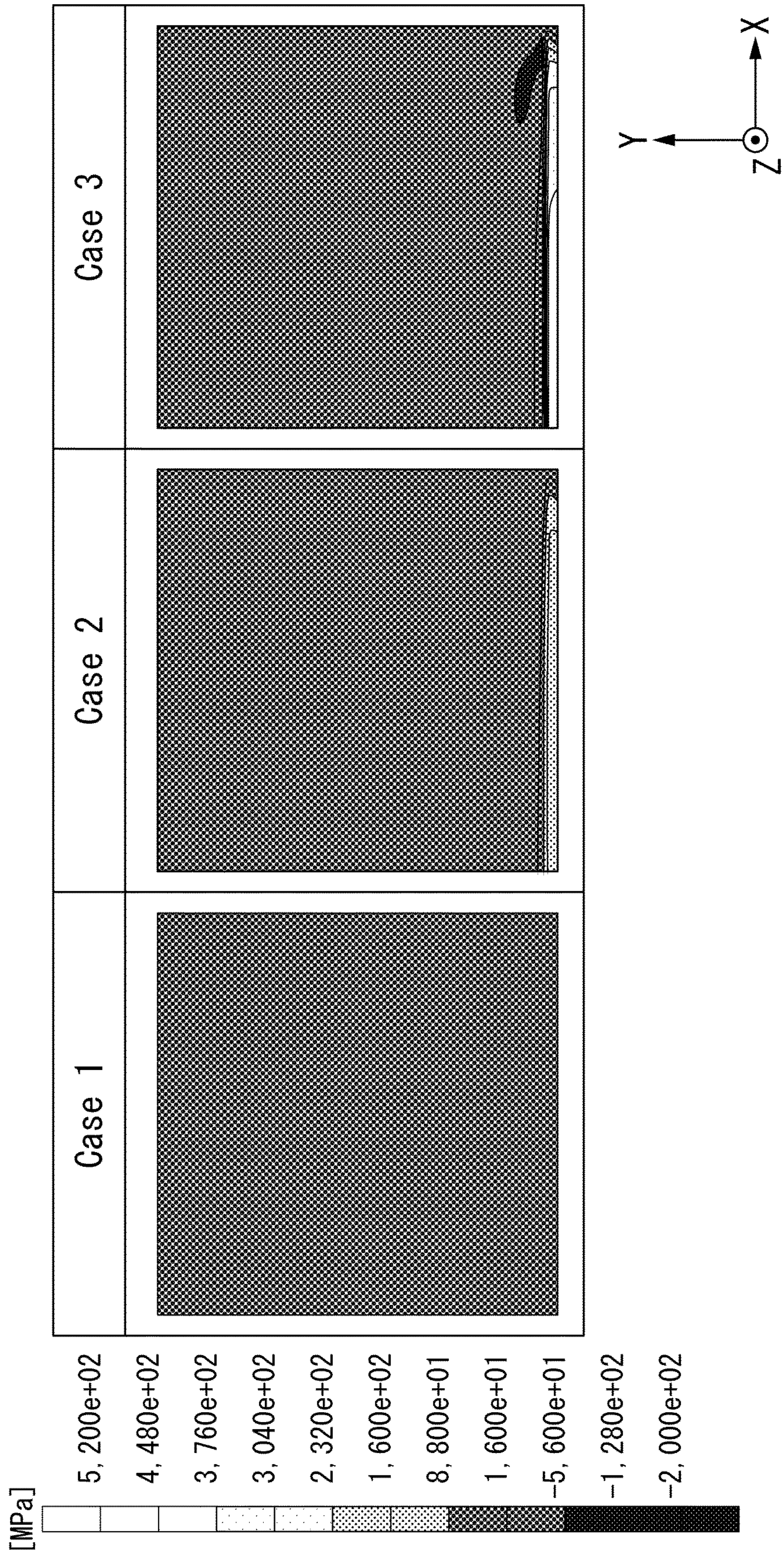
Case 1
Case 2
Case 3
[MPa]
5, 200e+02
4, 480e+02
3, 760e+02
3, 040e+02
2, 320e+02
1, 600e+02
8, 800e+01
1, 600e+01
−5, 600e+01
−1, 280e+02
−2, 000e+02
X
Y
Z

FIG. 3

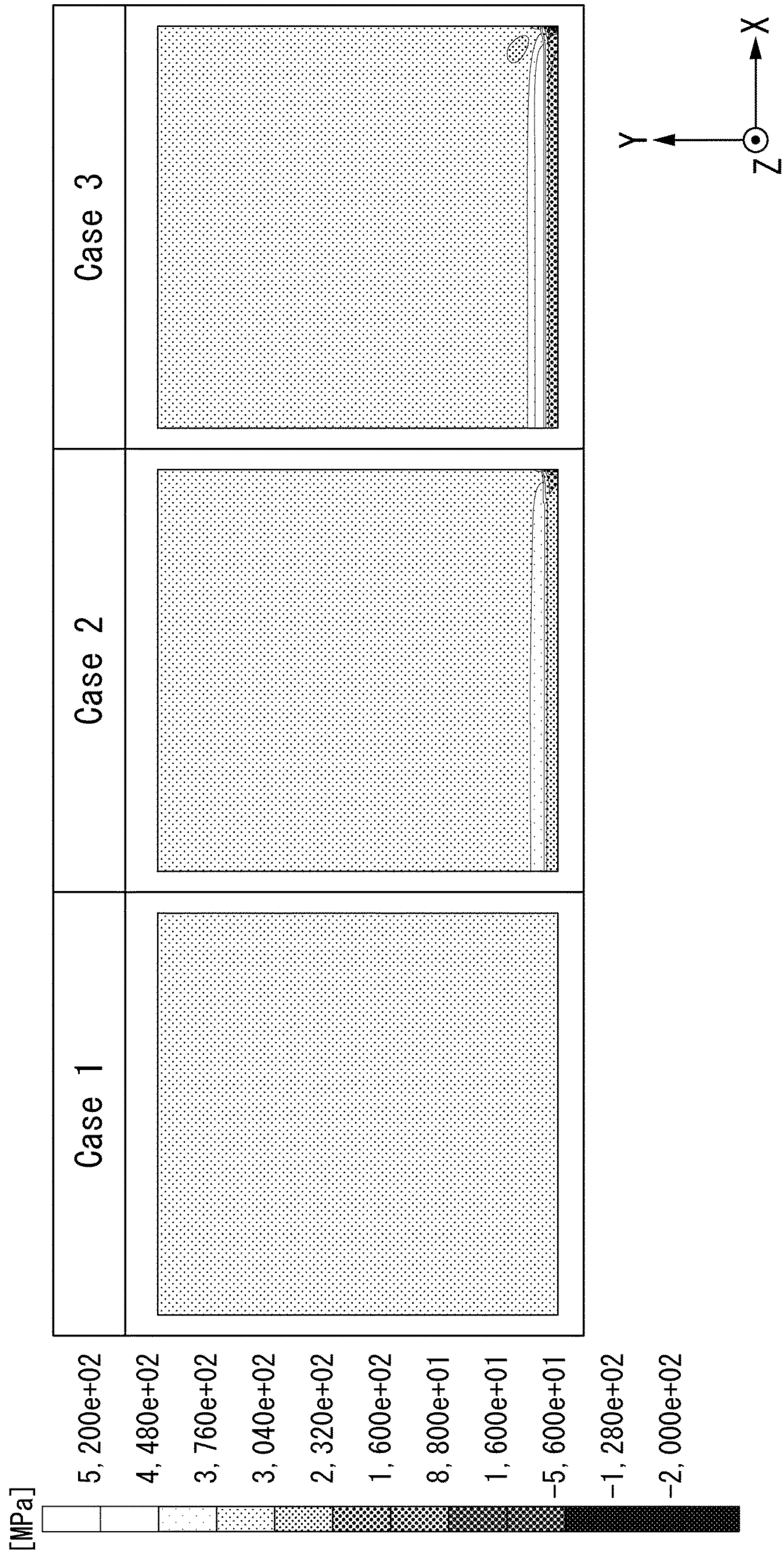
[MPa]
5, 200e+02
4, 480e+02
3, 760e+02
3, 040e+02
2, 320e+02
1, 600e+02
8, 800e+01
1, 600e+01
−5, 600e+01
−1, 280e+02
−2, 000e+02
Case 1
Case 2
Case 3
X
Y
Z

FIG. 4

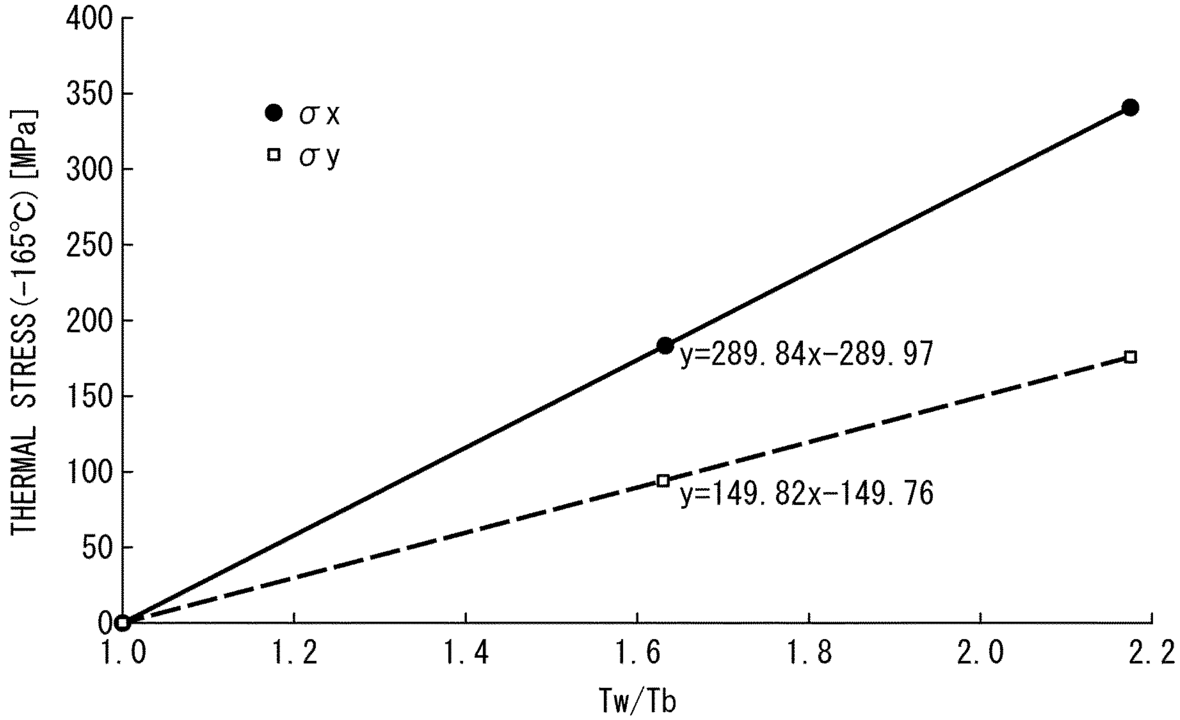
400
350
300
250
200
150
100
50
0
THERMAL STRESS(-165°C) [MPa]
σx
σy
y=289.84x-289.97
y=149.82x-149.76
1.0
1.2
1.4
1.6
1.8
2.0
2.2
Tw/Tb

FIG. 5

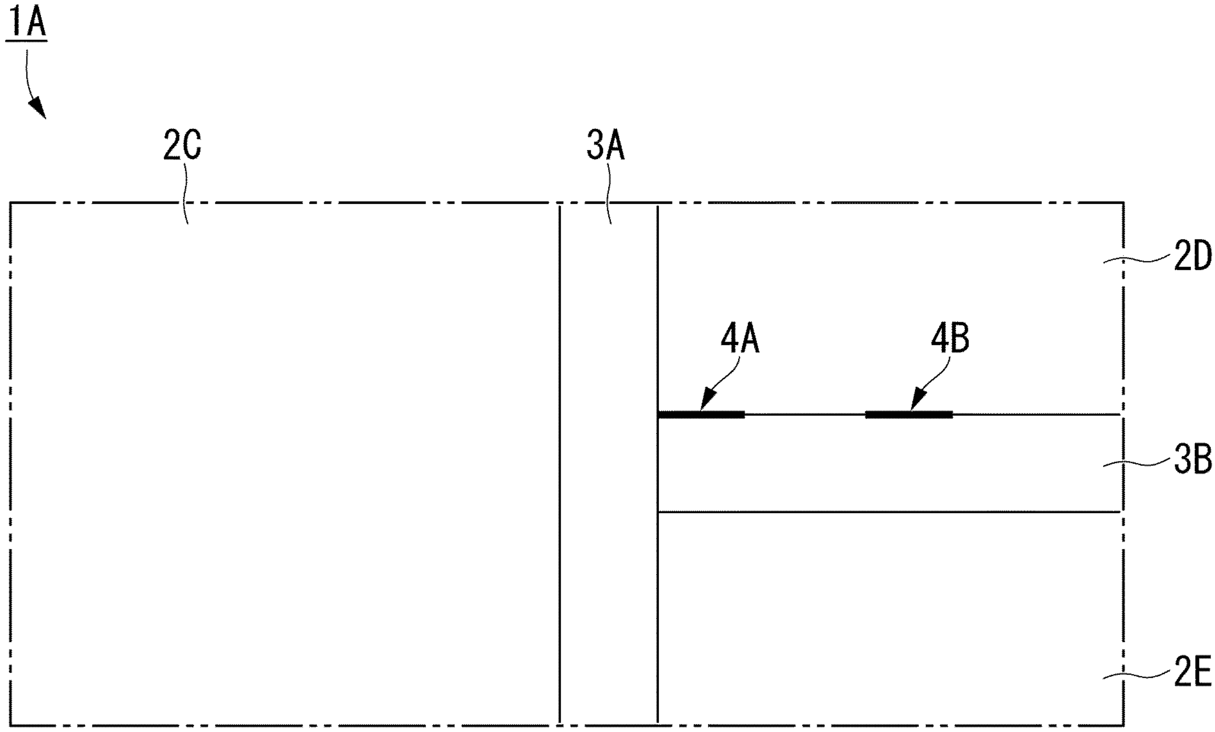
1A
2C
3A
2D
4A
4B
3B
2E

FIG. 6

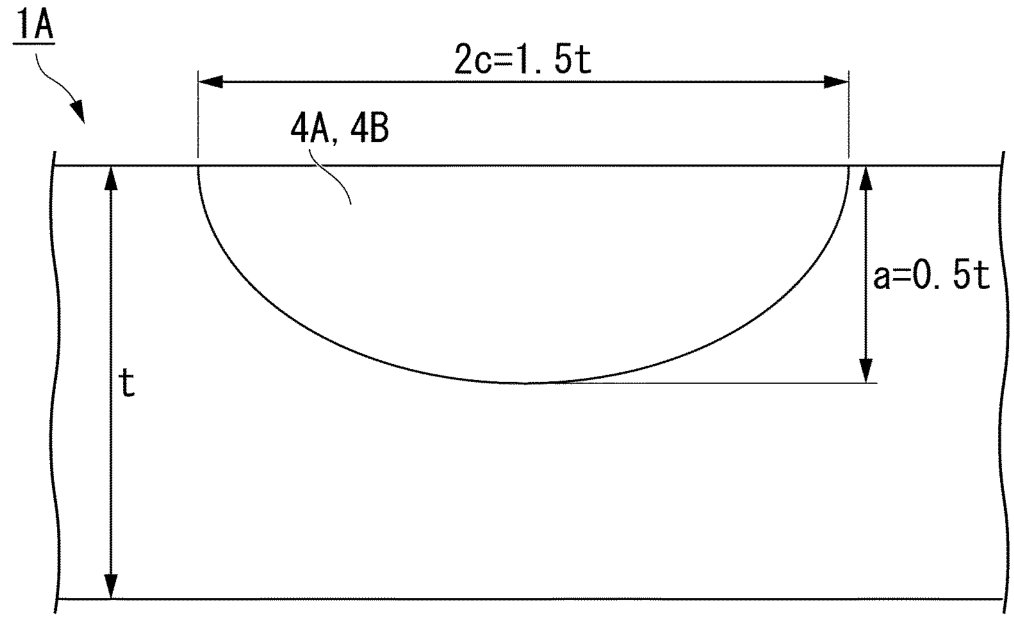


FIG. 7

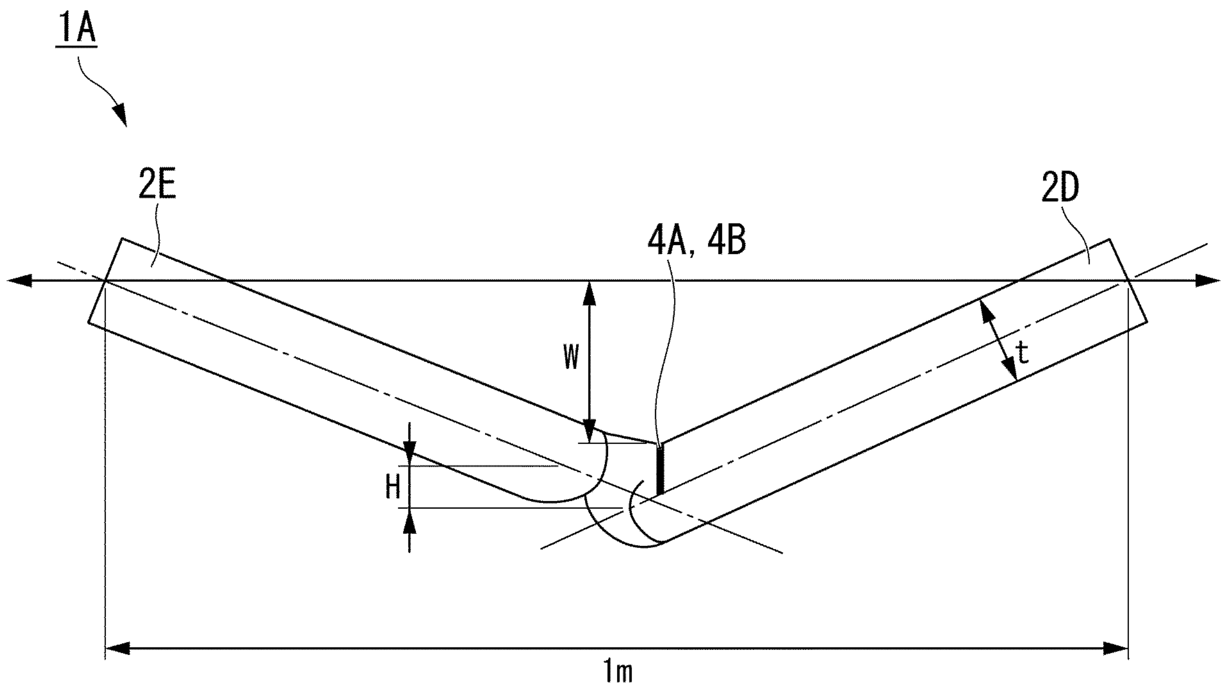

FIG. 8

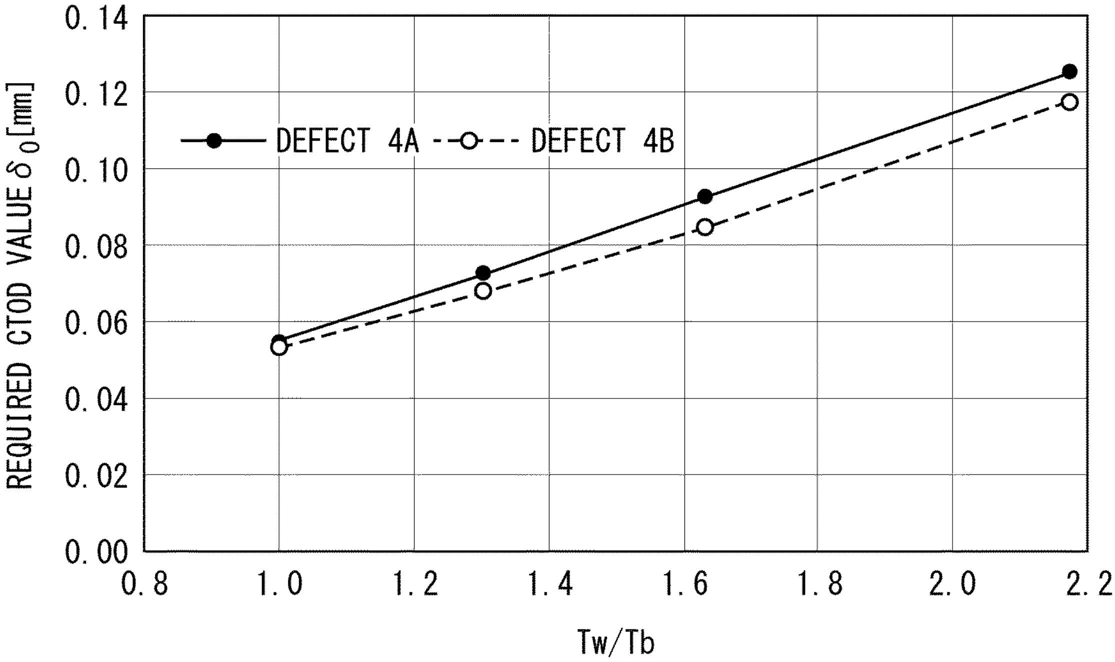
0.14
0.12
0.10
0.08
0.06
0.04
0.02
0.00
REQUIRED CTOD VALUE δ0[mm]
DEFECT 4A
DEFECT 4B
0.8
1.0
1.2
1.4
1.6
1.8
2.0
2.2
Tw/Tb

FIG. 9

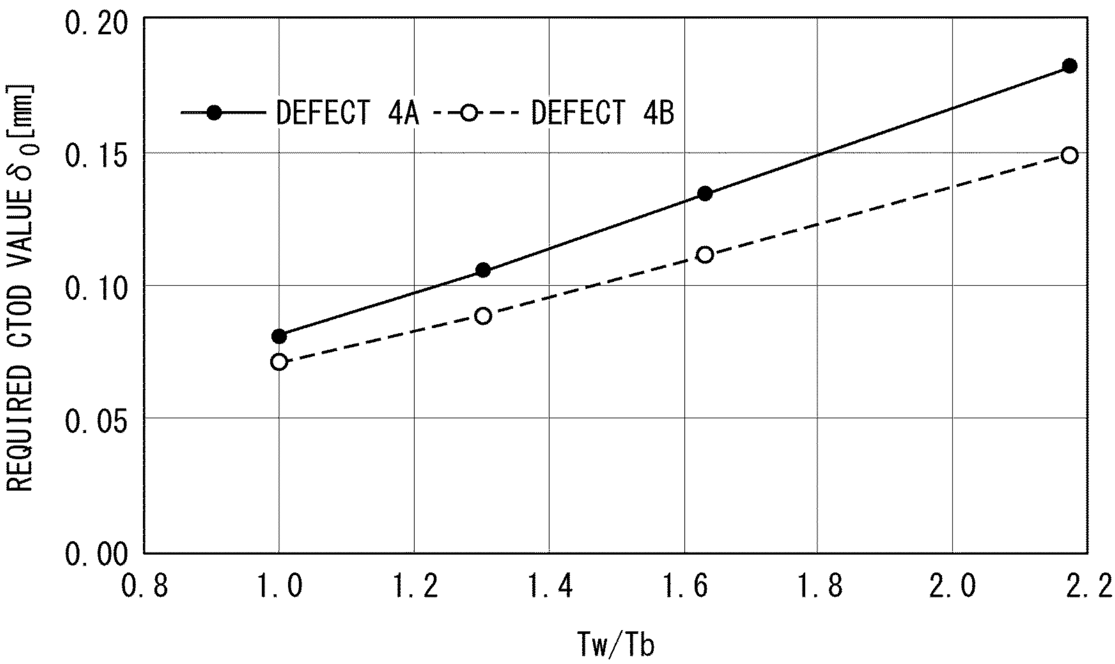
0.20
0.15
0.10
0.05
0.00
REQUIRED CTOD VALUE δ0[mm]
DEFECT 4A
DEFECT 4B
0.8
1.0
1.2
1.4
1.6
1.8
2.0
2.2
Tw/Tb

FIG. 10

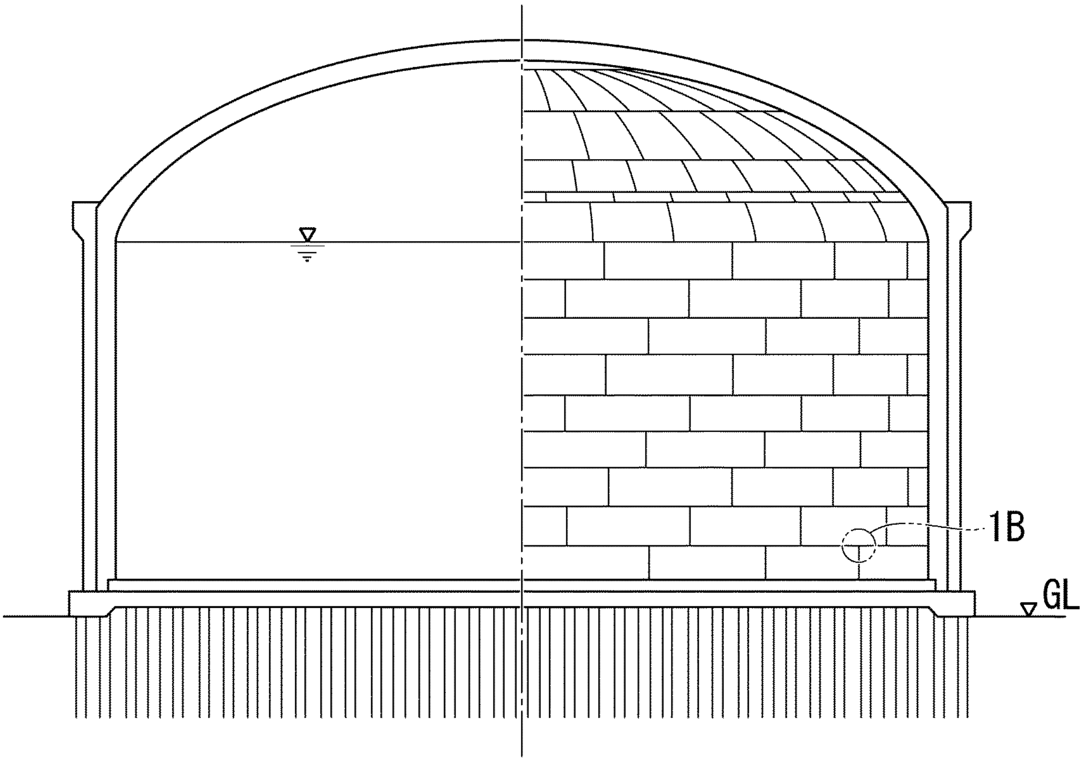


FIG. 11

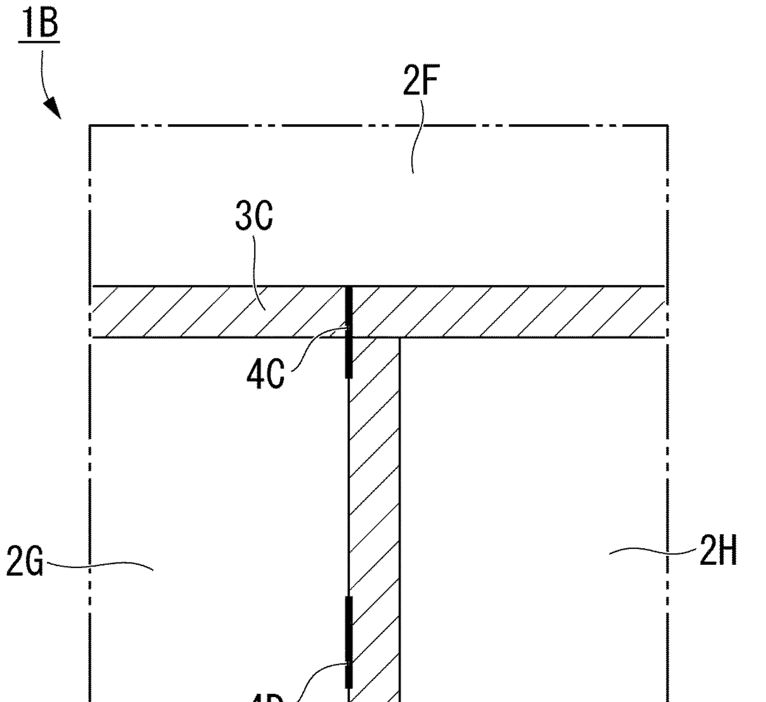

FIG. 12

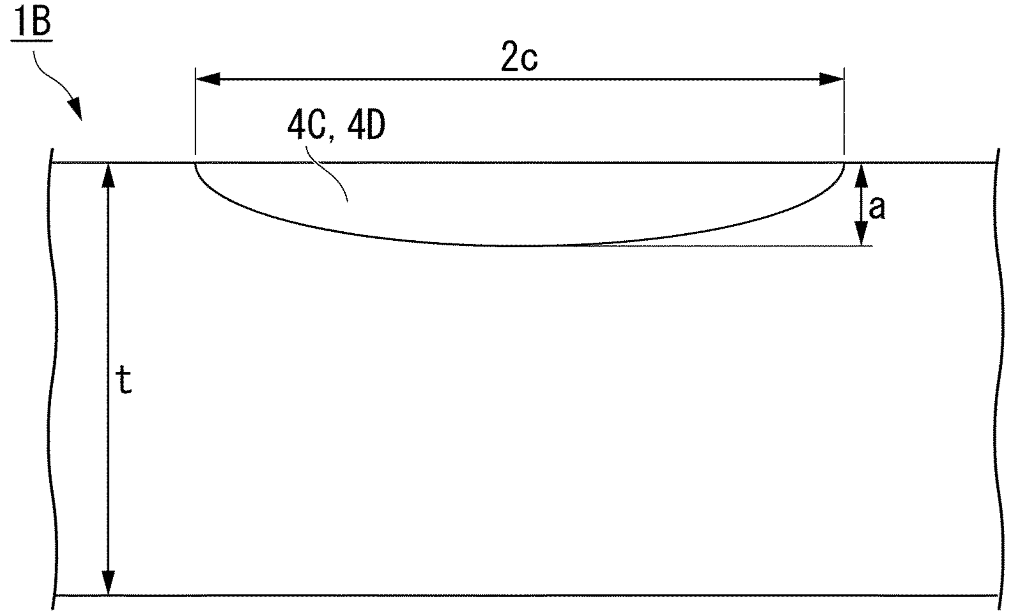
1B
2c
4C, 4D
a
t

FIG. 13

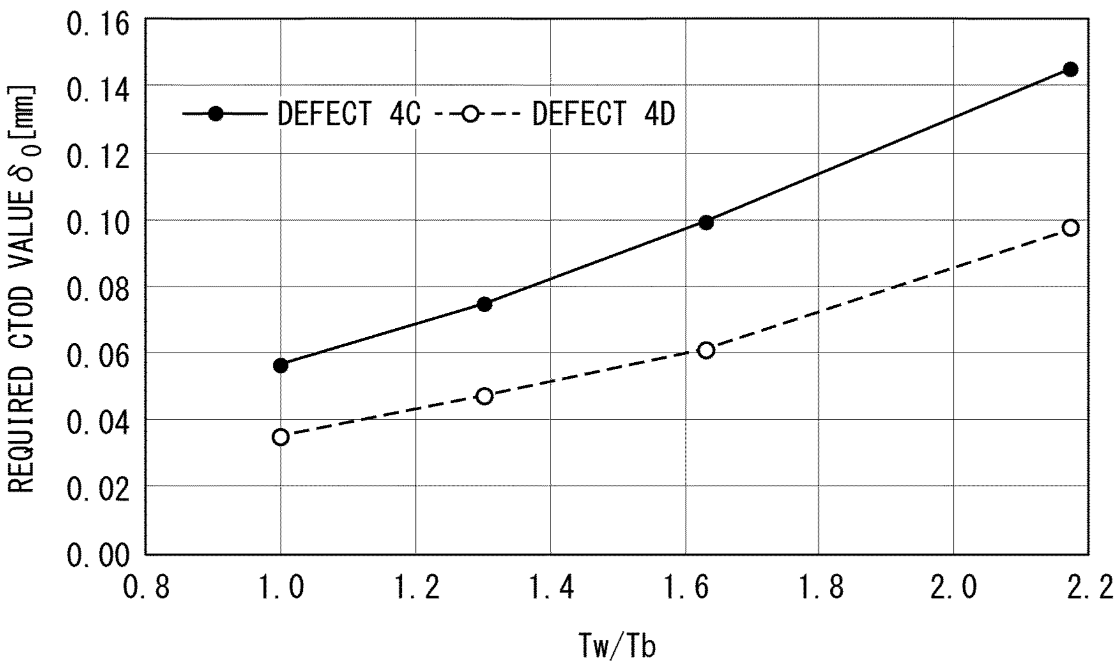
REQUIRED CTOD VALUE $\delta_0$[mm]
0.16
0.14
0.12
0.10
0.08
0.06
0.04
0.02
0.00
DEFECT 4C
DEFECT 4D
0.8
1.0
1.2
1.4
1.6
1.8
2.0
2.2
Tw/Tb

FIG. 14

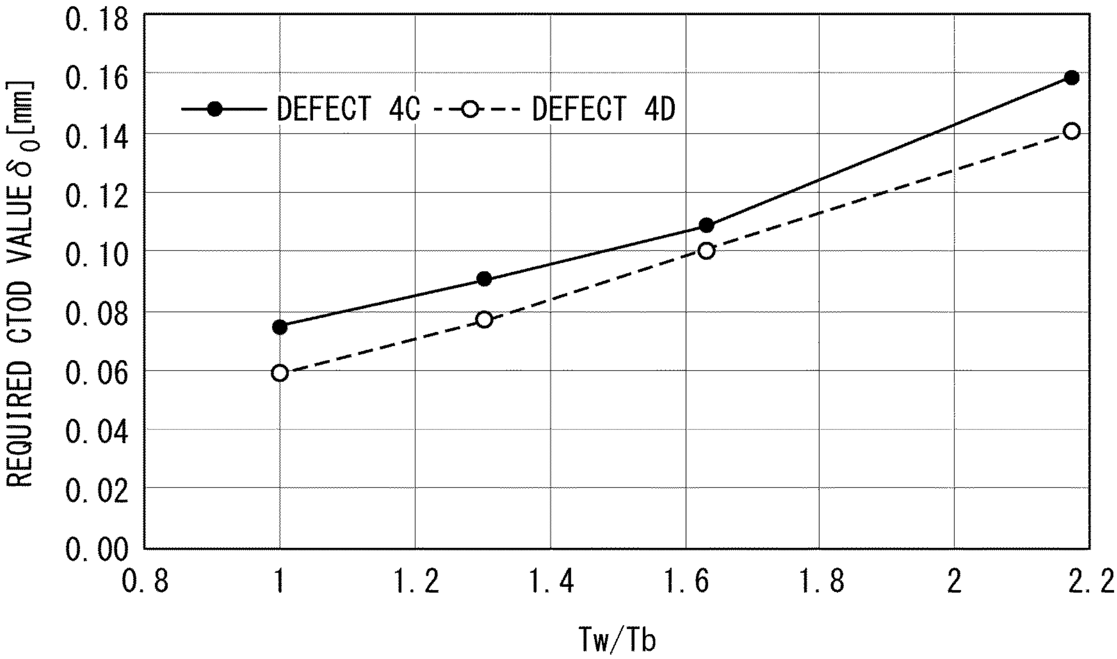
0.18
0.16
0.14
0.12
0.10
0.08
0.06
0.04
0.02
0.00
REQUIRED CTOD VALUE δ0[mm]
DEFECT 4C
DEFECT 4D
0.8
1
1.2
1.4
1.6
1.8
2
2.2
Tw/Tb

**INTERNATIONAL SEARCH REPORT**

International application No.
**PCT/JP2023/022598**

**A. CLASSIFICATION OF SUBJECT MATTER**

***B23K 9/23***(2006.01)i; ***B23K 9/00***(2006.01)i; ***B23K 31/00***(2006.01)i; ***B63B 25/16***(2006.01)i; ***B63B 73/43***(2020.01)i
FI: B23K9/23 Z; B23K9/00 501L; B23K9/23 C; B23K31/00 Z; B63B25/16; B63B73/43

According to International Patent Classification (IPC) or to both national classification and IPC

**B. FIELDS SEARCHED**

Minimum documentation searched (classification system followed by classification symbols)

B23K9/23; B23K9/00; B23K31/00; B63B25/16; B63B73/43

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2015-009247 A (KOBE STEEL, LTD.) 19 January 2015 (2015-01-19)<br>paragraphs [0002], [0007], [0008], [0022], [0029], [0042]-[0050], fig. 1, 2 | 5, 7, 12<br>1-4, 6, 8-11, 13-14 |
| Y<br>A | JP 2007-190586 A (MITSUBISHI HEAVY INDUSTRIES, LTD.) 02 August 2007 (2007-08-02)<br>paragraphs [0019]-[0022], fig. 1-3 | 5, 7, 12<br>1-4, 6, 8-11, 13-14 |
| A | 萱森 陽一 ほか, WES2805における溶接継手止端部き裂のCTOD評価に用いる応力集中とひずみの計算, 溶接学会論文集, vol. 25, no. 2, 一般社団法人 溶接学会, 2007, pp. 394-401 (KAYAMORI, Yoichi et al. Stress concentration and strain calculation for the CTOD evaluation of a weld toe crack in WES2805. Proceedings of the Japan Welding Society. Japan Welding Society.)<br>entire text, all drawings | 1-14 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 July 2023** | **08 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/022598**

| Patent document cited in search report | Publication date (day/month/year) | Patent family member(s) | Publication date (day/month/year) |
|---|---|---|---|
| JP 2015-009247 A | 19 January 2015 | (Family: none) | |
| JP 2007-190586 A | 02 August 2007 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2022099498 A
- JP 4578084 B

### Non-patent literature cited in the description

- **OKAWA et al.** Properties of 7%Ni-TMCP Steel and its Applicability to Large Scale LNG Storage Tanks. *Journal of High Pressure Institute of Japan*, 2019, vol. 57 (4), 221-230
- Guideline for LNG above-ground type storage tank. The Japan Gas Association, September 2019